(19)

Europäisches
Patentamt
European
Patent Office
Office européen
des brevets

(11)  **EP 4 711 211 A1**

(12)  # EUROPEAN PATENT APPLICATION
published in accordance with Art. 153(4) EPC

(43)  Date of publication:
18.03.2026  Bulletin 2026/12

(51)  International Patent Classification (IPC):
**B60R 16/023** (2006.01)

(21)  Application number: 24802801.1

(22)  Date of filing: 26.04.2024

(86)  International application number:
PCT/CN2024/090061

(87)  International publication number:
WO 2024/230516 (14.11.2024 Gazette 2024/46)

(84)  Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30)  Priority: 11.05.2023  CN 202310532927

(71)  Applicant: BYD Company Limited
Shenzhen, Guangdong 518118 (CN)

(72)  Inventors:
• YANG, Dongsheng
  Shenzhen, Guangdong 518118 (CN)

• HAN, Bing
  Shenzhen, Guangdong 518118 (CN)
• ZHONG, Luping
  Shenzhen, Guangdong 518118 (CN)
• JIANG, Jin
  Shenzhen, Guangdong 518118 (CN)
• HE, Yongbin
  Shenzhen, Guangdong 518118 (CN)
• CHEN, Xiaodong
  Shenzhen, Guangdong 518118 (CN)

(74)  Representative: Mathys & Squire
The Shard
32 London Bridge Street
London SE1 9SG (GB)

(54)  **CONTROLLER, POWER SYSTEM, AND VEHICLE**

(57)  This disclosure provides a control unit, a powertrain, and a vehicle, relating to the field of vehicle technologies. The control unit includes a master chip, and at least two of a traction motor drive circuit, first and second DC-DC converter drive circuits, a transmission drive circuit, a throttle signal sampling circuit, an OBC drive circuit, and a BMS that are connected to the master chip. The traction motor drive circuit drives a traction motor to work. The first DC-DC converter drive circuit drives a first DC-DC converter to boost a voltage of a power battery. The transmission drive circuits drive a transmission solenoid to work. The throttle signal sampling circuit samples a throttle signal of a vehicle. The second DC-DC converter drive circuit drives a second DC-DC converter to buck a voltage of the power battery. The OBC drive circuit drives an OBC to work. The BMS monitors a status of the power battery.

FIG. 1

**Description**

**CROSS-REFERENCE TO RELATED APPLICATIONS**

This disclosure claims priority to Chinese Patent Application No. 202310532927.9, filed on May 11, 2023 and entitled "CONTROL UNIT, POWERTRAIN AND VEHICLE", which is incorporated herein by reference in its entirety.

**TECHNICAL FIELD**

This disclosure relates to the field of vehicle technologies, and specifically, to a control unit, a powertrain, and a vehicle.

**BACKGROUND**

Currently, most of all-in-one control units in the industry have only achieved simple physical integration, and their hardware architectures are incapable of performing complex functional integration control based on a single master chip, and fail to truly meet the requirements of low-cost, modular, and platform-oriented electronic control systems.

**SUMMARY**

An objective of this disclosure is to provide a control unit, a powertrain, and a vehicle, to reduce hardware costs of the control unit and improve hardware stability.

According to a first aspect, an embodiment of this disclosure provides a control unit. The control unit includes a master chip; and at least two of a traction motor drive circuit, a first DC-DC converter drive circuit, a transmission drive circuit, a throttle signal sampling circuit, a second DC-DC converter drive circuit, an on-board charger (OBC) drive circuit, and a battery management system (BMS) that are separately connected to the master chip, wherein the traction motor drive circuit is configured to drive a traction motor of a vehicle to work; the first DC-DC converter drive circuit is configured to drive a first DC-DC converter to work, so as to boost a voltage provided by a power battery of the vehicle; the transmission drive circuit is configured to drive a transmission solenoid of the vehicle to work; the throttle signal sampling circuit is configured to sample a throttle signal of the vehicle; the second DC-DC converter drive circuit is configured to drive a second DC-DC converter to work, so as to buck a voltage provided by the power battery; the OBC drive circuit is configured to drive an OBC of the vehicle to work; and the BMS is configured to monitor a status of the power battery.

In addition, the control unit according to this embodiment of this disclosure may further have the following additional technical features.

According to an embodiment of this disclosure, the control unit further includes at least one of a generation motor drive circuit and an engine drive circuit that are separately connected to the master chip. The generation motor drive circuit is configured to drive a generation motor of the vehicle to work. The engine drive circuit is configured to drive a fuel injector and an igniter of an engine of the vehicle to work.

According to an embodiment of this disclosure, the control unit includes the traction motor drive circuit, the engine drive circuit, and the throttle signal sampling circuit. The master chip is configured to: receive the throttle signal sent by the throttle signal sampling circuit, determine output torque of the traction motor and the engine based on the throttle signal, send a traction motor drive signal to the traction motor drive circuit based on output torque of the traction motor, and send an engine drive signal to the engine drive circuit based on output torque of the engine.

According to an embodiment of this disclosure, the control unit includes the traction motor drive circuit, the first DC-DC converter drive circuit, and the generation motor drive circuit.

According to an embodiment of this disclosure, the control unit includes the traction motor drive circuit, the first DC-DC converter drive circuit, the generation motor drive circuit, the transmission drive circuit, and the throttle signal sampling circuit.

According to an embodiment of this disclosure, the control unit further includes: a first PWM signal output module, separately connected to the master chip and the traction motor drive circuit, and configured to output, under the control of the master chip, a first PWM signal to the traction motor drive circuit, so as to drive the traction motor to work; a second PWM signal output module, separately connected to the master chip and the generation motor drive circuit, and configured to output, under the control of the master chip, a second PWM signal to the generation motor drive circuit, so as to drive the generation motor to work; and a third PWM signal output module, separately connected to the master chip and the first DC-DC converter drive circuit, and configured to output, under the control of the master chip, a third PWM signal to the first DC-DC converter drive circuit, so as to control the first DC-DC converter to work.

According to an embodiment of this disclosure, the control unit further includes a first electronic control module, a second electronic control module, and a first DC-DC converter. The first electronic control module is separately connected to the traction motor drive circuit and the traction motor, the traction motor drive circuit is configured to control, based on the first PWM signal, the first electronic control module to work, so as to drive the traction motor to work. The second electronic control module is separately connected to the generation motor drive circuit and the generation motor, the generation motor drive circuit is configured to control, based on the second PWM signal, the second electronic control module to work, so as to drive the generation motor to work. The first DC-DC converter is connected to the first DC-DC converter drive circuit, and the first DC-DC converter drive circuit is configured to control, based on the third PWM signal, the first DC-DC converter to work.

According to an embodiment of this disclosure, the control unit further includes: a first resolver excitation circuit, connected to the master chip, and configured to output, under the control of the master chip, a first excitation signal to a first resolver disposed corresponding to the traction motor, so as to supply a stator power source to a stator of the traction motor; and a first resolver signal collection circuit, connected to the master chip, and configured to collect a resolver signal of the first resolver, wherein the master chip is further configured to obtain a rotor position and angle of the traction motor based on the resolver signal collected by the first resolver signal collection circuit, and control, based on the rotor position and angle of the traction motor, the first PWM signal output module to output the first PWM signal.

According to an embodiment of this disclosure, the control unit further includes: a first gate-level detection circuit, connected to the master chip, and configured to send an error signal upon receiving any signal of a traction motor overcurrent signal, a DC-DC battery side overvoltage signal, a DC-DC bus side overvoltage signal, and a traction motor drive circuit error signal, wherein the master chip is further configured to prohibit the first PWM signal output module from outputting the first PWM signal upon receiving the error signal sent by the first gate-level detection circuit.

According to an embodiment of this disclosure, the control unit further includes: a first gate-level latch circuit, separately connected to the first gate-level detection circuit and the first PWM signal output module, and configured to continuously output a stop-output signal to the first PWM signal output module after receiving the error signal sent by the first gate-level detection circuit, so as to prohibit the first PWM signal output module from outputting the first PWM signal.

According to an embodiment of this disclosure, the first gate-level latch circuit is further connected to the master chip, and is configured to stop outputting the stop-output signal upon receiving a latch clear signal sent by the master chip.

According to an embodiment of this disclosure, the control unit further includes: a first overcurrent detection circuit, separately connected to the master chip and the first gate-level detection circuit; and a first hardware overcurrent threshold setting circuit, separately connected to the master chip and the first overcurrent detection circuit, and configured to provide, under the control of the master chip, a first hardware current threshold for the first overcurrent detection circuit, so that when determining that the traction motor is overcurrent based on the first hardware current threshold and a sampled traction motor current, the first overcurrent detection circuit separately sends the traction motor overcurrent signal to the master chip and the first gate-level detection circuit.

According to an embodiment of this disclosure, the control unit further includes: a first current detection circuit, connected to the master chip, and configured to collect a traction motor current, wherein the master chip is further configured to determine that the traction motor is overcurrent when the traction motor current is greater than a first software current threshold, and the first software current threshold is smaller than the first hardware current threshold.

According to an embodiment of this disclosure, the control unit further includes: a second resolver excitation circuit, connected to the master chip, and configured to output, under the control of the master chip, a second excitation signal to a second resolver disposed corresponding to the generation motor, so as to supply a stator power source to a stator of the generation motor; and a second resolver signal collection circuit, connected to the master chip, and configured to collect a resolver signal of the second resolver, wherein the master chip is further configured to obtain a rotor position and angle of the generation motor based on the resolver signal collected by the second resolver signal collection circuit, and control, based on the rotor position and angle of the generation motor, the second PWM signal output module to output the second PWM signal.

According to an embodiment of this disclosure, the control unit further includes: a second gate-level detection circuit connected to the master chip, and configured to send an error signal upon receiving any signal of a generation motor overcurrent signal, a DC-DC battery side overvoltage signal, a DC-DC bus side overvoltage signal, and a generation motor drive circuit error signal, wherein the master chip is further configured to prohibit the second PWM signal output module from outputting the second PWM signal upon receiving the error signal sent by the second gate-level detection circuit.

According to an embodiment of this disclosure, the control unit further includes: a second gate-level latch circuit, separately connected to the second gate-level detection circuit and the second PWM signal output module, and configured to continuously output a stop-output signal to the second PWM signal output module after receiving the error signal sent by the second gate-level detection circuit, so as to prohibit the second PWM signal output module from outputting the second PWM signal.

According to an embodiment of this disclosure, the second gate-level latch circuit is further connected to the master chip, and is configured to stop outputting the stop-output signal upon receiving a latch clear signal sent by the master chip.

According to an embodiment of this disclosure, the control unit further includes: a second overcurrent detection circuit, separately connected to the master chip and the second gate-level detection circuit; and a second hardware overcurrent threshold setting circuit, separately connected to the master chip and the second overcurrent detection circuit, and configured to provide, under the control of the master chip, a second hardware current threshold for the second overcurrent detection circuit, so that when determining that the generation motor is overcurrent based on the second hardware current threshold and a sampled generation motor current, the second overcurrent detection circuit separately sends the generation motor overcurrent signal to the master chip and the second gate-level detection circuit.

According to an embodiment of this disclosure, the control unit further includes: a second current detection circuit, connected to the master chip, and configured to collect a generation motor current, wherein the master chip is further configured to determine that the generation motor is overcurrent when the generation motor current is greater than a second software current threshold, and the second software current threshold is smaller than the second hardware current threshold.

According to an embodiment of this disclosure, the control unit further includes: a third gate-level detection circuit, connected to the master chip, and configured to send an error signal upon receiving any signal of a DC-DC overcurrent signal, a DC-DC battery side overvoltage signal, a DC-DC bus side overvoltage signal, and a first DC-DC converter drive circuit error signal, wherein the master chip is further configured to prohibit the third PWM signal output module from outputting the third PWM signal upon receiving the error signal sent by the third gate-level detection circuit.

According to an embodiment of this disclosure, the control unit further includes: a third gate-level latch circuit, separately connected to the third gate-level detection circuit and the third PWM signal output module, and configured to continuously output the stop-output signal to the third PWM signal output module after receiving the error signal sent by the third gate-level detection circuit, so as to prohibit the third PWM signal output module from outputting the third PWM signal.

According to an embodiment of this disclosure, the third gate-level latch circuit is further connected to the master chip, and is configured to stop outputting a stop-output signal upon receiving a latch clear signal sent by the master chip.

According to an embodiment of this disclosure, the control unit further includes: a third overcurrent detection circuit, separately connected to the master chip and the third gate-level detection circuit; and a third hardware overcurrent threshold setting circuit, separately connected to the master chip and the third overcurrent detection circuit, and configured to provide, under the control of the master chip, a third hardware current threshold for the third overcurrent detection circuit, so that when determining that the first DC-DC converter is overcurrent based on the third hardware current threshold and a sampled current of the first DC-DC converter, the third overcurrent detection circuit separately sends the DC-DC overcurrent signal to the master chip and the third gate-level detection circuit.

According to an embodiment of this disclosure, the control unit further includes: a third current detection circuit, connected to the master chip, and configured to collect a current of the first DC-DC converter, wherein the master chip is further configured to determine that the first DC-DC converter is overcurrent when the current of the first DC-DC converter is greater than a third software current threshold, and the third software current threshold is smaller than the third hardware current threshold.

According to an embodiment of this disclosure, the control unit further includes: a first voltage sampling circuit, configured to sample a voltage of a DC-DC battery side; a first overvoltage detection circuit, separately connected to the first voltage sampling circuit, the master chip, and the third gate-level detection circuit; and a first hardware voltage threshold setting circuit, separately connected to the master chip and the first overvoltage detection circuit, and configured to provide, under the control of the master chip, a first hardware voltage threshold for the first overvoltage detection circuit, so that when determining that the DC-DC battery side is overvoltage based on the first hardware voltage threshold and the DC-DC battery side voltage, the first overvoltage detection circuit separately sends the DC-DC battery side overvoltage signal to the master chip and the gate-level detection circuit.

According to an embodiment of this disclosure, the control unit further includes: a second voltage sampling circuit, configured to sample a voltage of a DC-DC bus side; a second overvoltage detection circuit, separately connected to the second voltage sampling circuit, the master chip, and a gate-level detection circuit; and a second hardware voltage threshold setting circuit, separately connected to the master chip and the second overvoltage detection circuit, and configured to provide, under the control of the master chip, a second hardware voltage threshold for the second overvoltage detection circuit, so that when determining that a DC-DC bus side is overvoltage based on the second hardware voltage threshold and the DC-DC bus side voltage, the second overvoltage detection circuit separately sends the DC-DC bus side overvoltage signal to the master chip and the gate-level detection circuit.

According to an embodiment of this disclosure, the control unit further includes: a first CAN transceiver circuit, connected to the master chip, and configured to implement CAN communication between the master chip and an energy network of the vehicle.

According to an embodiment of this disclosure, the control unit further includes: a second CAN transceiver circuit, connected to the master chip, and configured to implement CAN communication between the master chip and a chassis network of the vehicle; and a third CAN transceiver circuit, connected to the master chip, and configured to implement CAN communication between the master chip and an ECM network of the vehicle.

According to an embodiment of this disclosure, the control unit further includes an auxiliary chip and a monitoring circuit. The monitoring circuit is separately connected to the third CAN transceiver circuit, the master chip, and the auxiliary chip. The master chip is further configured to: send a CAN turn-off signal to the monitoring circuit via the auxiliary chip when the ECM network is abnormal, so as to turn off the third CAN transceiver circuit by the monitoring circuit.

According to an embodiment of this disclosure, the control unit further includes a power management chip. The master chip is separately connected to the power management chip and the auxiliary chip, and is further configured to reset the master chip via the auxiliary chip and the power management chip when an error is reported.

According to an embodiment of this disclosure, the control unit further includes a driver chip connected to the master chip, and the driver chip is configured to drive, under the control of the master chip, a clutch pressure valve, a main pressure solenoid, and a supercooling protection solenoid of a transmission system.

According to an embodiment of this disclosure, the control unit further includes a sampling circuit configured to sample at least one of the following signals: a pressure signal sampling signal, a temperature sampling signal, a switch signal, a position signal, a collision signal, an electronically-controlled coolant pump feedback signal, a waterway temperature, a traction motor temperature, a generation motor temperature, a first electronic control module temperature, a second electronic control module temperature, and a DC-DC converter temperature.

According to an embodiment of this disclosure, the control unit further includes: a LIN transceiver, connected to the master chip, and configured to connect to an external control unit, so as to implement communication between the master chip and the external control unit via a LIN protocol; and a storage module, connected to the master chip, and configured to store data generated during a working process of the master chip.

According to an embodiment of this disclosure, the control unit further includes: a power control circuit, separately connected to the second CAN transceiver circuit and the power management chip, and configured to control a power source, after receiving a wake-up signal, to supply power to the power management chip, so as to wake up the master chip via the power management chip, wherein the wake-up signal is generated by the second CAN transceiver circuit based on a wake-up packet sent by the chassis network, wherein after being woken up, the master chip outputs a power holding signal to the power control circuit, so that the power control circuit continuously controls, under the control of the power holding signal, the power source to supply power to the power management chip.

According to a second aspect, an embodiment of this disclosure provides a powertrain, including the control unit in the foregoing embodiments.

According to a third aspect, an embodiment of this disclosure provides a vehicle, including the powertrain in the foregoing embodiments.

According to the control unit, the powertrain, and the vehicle in the embodiments of this disclosure, at least two of a traction motor control unit, a generation motor control unit, a DC-DC control unit, a transmission control unit, and a vehicle control unit are combined into one master chip of the control unit. Therefore, at least two of the traction motor, dual DC-DCs, a transmission, and a plurality of vehicle control functions are controlled by one master chip, thereby reducing the hardware costs of the control unit and improving hardware stability.

Additional aspects and advantages of this disclosure are set forth in part in the following description, and in part become apparent from the following description, or may be learned through the practice of this disclosure.

## BRIEF DESCRIPTION OF THE DRAWINGS

FIG. 1 is a block diagram of a structure of a control unit mainboard according to an embodiment of this disclosure;
FIG. 2 is a block diagram of a structure of a control unit mainboard according to a specific embodiment of this disclosure;
FIG. 3 is a block diagram of a structure of a traction motor control part according to an embodiment of this disclosure;
FIG. 4 is a block diagram of a structure of a generation motor control part according to an embodiment of this disclosure;
FIG. 5 is a block diagram of a structure of a DC-DC control part according to an embodiment of this disclosure;
FIG. 6 is a block diagram of a structure of a vehicle control part according to an embodiment of this disclosure;
FIG. 7 is a block diagram of a structure of a control unit mainboard according to a specific embodiment of this disclosure;
FIG. 8 is a block diagram of a structure of a power distribution part according to an embodiment of this disclosure;
FIG. 9 is a block diagram of a structure of a powertrain according to an embodiment of this disclosure; and
FIG. 10 is a block diagram of a structure of a vehicle according to an embodiment of this disclosure.

Reference numerals:

100: control unit; 310: first DC-DC converter; 320: second DC-DC converter; 400a: power battery; 400b: low-voltage storage battery; M1: traction motor; M2: generation motor; M3: engine; 2a: traction motor drive circuit; 3a: first DC-DC converter drive circuit; 3b: transmission drive circuit; 3c: throttle signal sampling circuit; 3d: second DC-DC converter drive circuit; 3e: on-board charger (OBC) drive circuit; 3f: battery management system (BMS); 3g: driver chip; 4a: first PWM signal output module; 4b: second PWM signal output module; 4c: third PWM signal output module; 5a: first electronic control module; 5b: second electronic control module; 1: master chip; 5: first gate-level detection circuit; 6: first resolver excitation circuit; 7: first resolver signal collection circuit; 8: first gate-level latch circuit; 9: first current detection circuit; 10: first hardware overcurrent threshold setting circuit; 11: first overcurrent detection circuit; 13: second gate-level detection circuit; 14: second resolver excitation circuit; 15: second resolver signal collection circuit; 16: second gate-level latch circuit; 17: second current detection circuit; 18: second hardware overcurrent threshold setting circuit; 19: second overcurrent detection circuit; 21: third gate-level detection circuit; 22: third gate-level latch circuit; 23: third current detection circuit; 24: third hardware overcurrent threshold setting circuit; 25: third overcurrent detection circuit; 26: first voltage sampling circuit; 27: first hardware voltage threshold setting circuit; 28: first overvoltage detection circuit; 29: second voltage sampling circuit; 30: second hardware voltage threshold setting circuit; 31: second overvoltage detection circuit; 32: first CAN transceiver circuit; 33: second CAN transceiver circuit; 34: third CAN transceiver circuit; 35: fourth CAN transceiver circuit; 36: auxiliary chip; 37: monitoring circuit; 38: power management chip; 40: digital signal conditioning circuit; 41: analog signal conditioning circuit; 42: temperature sampling circuit; 43: LIN transceiver; 44: storage module; 45: power control circuit; 46: voltage monitoring circuit; 451; first power distribution unit; 452: second power distribution unit; 4511: first preset power source; 4512: soft start circuit; 4513: first filter circuit; 4521: second preset power source; 4522: second filter circuit; 4523: switch circuit; 4524: wake-up source; 1000: powertrain; 10000: vehicle.

## DETAILED DESCRIPTION OF PREFERRED EMBODIMENTS

Embodiments of this disclosure are described in detail below, examples of which are shown in the accompanying drawings, where same or similar reference numerals throughout represent same or similar elements or elements having same or similar functions. The embodiments described below with reference to the accompanying drawings are exemplary and are intended to explain this disclosure, and are not to be construed as a limitation on this disclosure.

A control unit, a powertrain and a vehicle according to embodiments of this disclosure are described below with reference to the accompanying drawings.

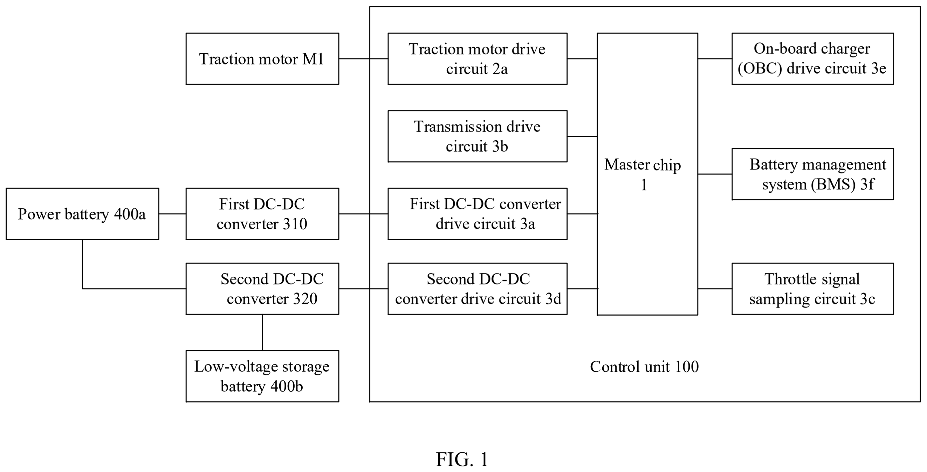

FIG. 1 is a block diagram of a structure of a control unit according to an embodiment of this disclosure.

As shown in FIG. 1, the control unit 100 includes a master chip 1; and at least two of a traction motor drive circuit 2a (which may be disposed on a first drive board), a first DC-DC converter drive circuit 3a (which may be disposed on a second drive board), a transmission drive circuit 3b, a throttle signal sampling circuit 3c, a second DC-DC converter drive circuit 3d, an on-board charger (OBC) drive circuit 3e, and a battery management system (BMS) 3f that are separately connected to the master chip 1 (FIG. 1 shows including 2a, and 3a to 3f described above as an example). The master chip 1 may use an RH850/C1M-A2.

The traction motor drive circuit 2a is configured to drive a traction motor M1 of a vehicle to work. The first DC-DC converter drive circuit 3a is configured to drive a first DC-DC converter 310 to work, so as to boost a voltage provided by a power battery 400a of the vehicle. The transmission drive circuit 3b (which may be implemented by an L9305 chip) is configured to drive a transmission solenoid of the vehicle to work. The throttle signal sampling circuit 3c (which may be connected to a throttle sensor) is configured to sample a throttle signal of the vehicle. The second DC-DC converter drive circuit 3d is configured to drive a second DC-DC converter 320 to work, so as to buck a voltage provided by the power battery 400a and charge a low-voltage storage battery 400b. The OBC drive circuit 3e is configured to drive an OBC of the vehicle to work, so as to charge the power battery 400a. The BMS 3f is configured to monitor statuses (such as a battery temperature status and a voltage status) of the power battery 400a.

Specifically, the control unit 100 includes at least two of the traction motor drive circuit 2a, the first DC-DC converter drive circuit 3a, the transmission drive circuit 3b, the throttle signal sampling circuit 3c, the second DC-DC converter drive circuit 3d, the on-board charger (OBC) drive circuit 3e, and the battery management system (BMS) 3f, which may have $C_7^2 + C_7^3 + C_7^4 + C_7^5 + C_7^6 + C_7^7$, that is, 21+35+35+21+7+1=120 combinations. The control unit 100 that includes the traction motor drive circuit 2a, the throttle signal sampling circuit 3c, and the first DC-DC converter drive circuit 3a is used as an example. After a first torsion request (which may be determined based on the throttle signal sampled by the throttle signal sampling circuit 3c) is received, the master chip 1 may control the traction motor drive circuit 2a to control a first electronic control module 5a of the vehicle, so as to drive the traction motor M1 to work, implementing driving the vehicle to move. After a boost request is received, the first DC-DC converter drive circuit 3a is controlled to boost the first DC-DC converter 310, and in this case, the power battery 400a of the vehicle may supply power to the traction motor M1 via the first DC-DC converter 310. Therefore, the control unit integrates traction motor control and DC-DC boost control, and the two kinds of control are implemented by one master chip 1. Compared with simple physical integration in related technologies, the control unit has lower hardware costs, better stability, and lower complexity.

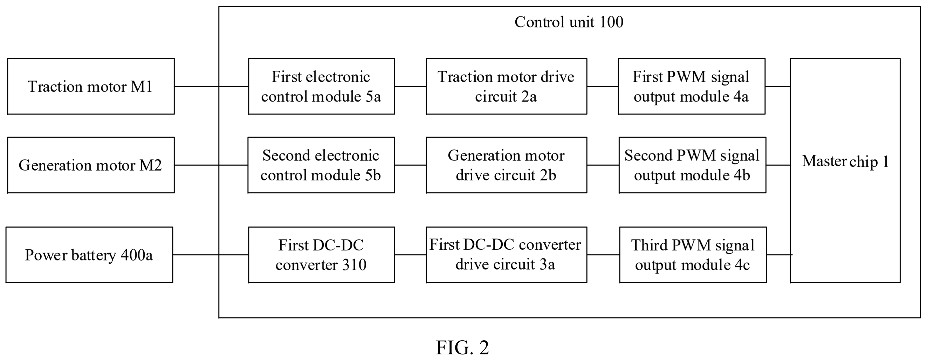

In some embodiments, as shown in FIG. 2, the control unit 100 further includes at least one of a generation motor drive circuit 2b (that may be disposed on the second drive board) and an engine drive circuit 2c that are separately connected to the master chip 1. The generation motor drive circuit 2b is configured to drive a generation motor M2 of the vehicle to work. The engine drive circuit 2c is configured to drive a fuel injector and an igniter of an engine M3 of the vehicle to work.

Specifically, the control unit 100 includes at least two of the traction motor drive circuit 2a, the first DC-DC converter drive circuit 3a, the transmission drive circuit 3b, the throttle signal sampling circuit 3c, the second DC-DC converter drive circuit 3d, the on-board charger (OBC) drive circuit 3e, and the battery management system (BMS) 3f, and further includes at least one of the generation motor drive circuit 2b and the engine drive circuit 2c, which may have 120×3=360 combinations. The control unit 100 that includes the traction motor drive circuit 2a, the throttle signal sampling circuit 3c, the generation motor drive circuit 2b, and the second DC-DC converter drive circuit 3d is used as an example. After a first torsion request (which may be determined based on the throttle signal sampled by the throttle signal sampling circuit 3c) is received, the master chip 1 may control the traction motor drive circuit 2a to control the first electronic control module 5a of the vehicle, so as to drive the traction motor M1 to work, implementing driving the vehicle to move. After a second torsion request is received, the generation motor drive circuit 2b may be controlled to control the second electronic control module 5b of the vehicle to work, so that the generation motor M2 generates electricity and supplies power to the traction motor M1. After a step-down request is received, the second DC-DC converter drive circuit 3d is controlled to buck the second DC-DC converter 320, and in this case, the power battery 400a may charge the low-voltage storage battery 400b via the second DC-DC converter 320.

In this embodiment, the traction motor M1, the generation motor M2, and the DC-DC converter are controlled by one master chip 1, which implements integration of functions of a three-in-one control unit including a traction motor control unit (Traction Motor Control unit, TMCU), a generation motor control unit (Generation Motor Control unit, GMCU), and a DC-DC converter (Bi-directional DC-DC Converter, BDC), and may reduce hardware costs of the control unit 100 and improve hardware stability. In addition, the generation motor drive circuit 2b configured to drive the second electronic control module 5b and the first DC-DC converter drive circuit 3a configured to drive the first DC-DC converter 310 are integrated. The second electronic control module 5b and the first DC-DC converter 320 are driven by one drive board, which can further reduce costs of a control system and save occupied space of the control system. In addition, the first drive board and the second drive board are disposed separately, which may implement independent control of the traction motor M1, the generation motor M2, and the first DC-DC converter 310, and improve control convenience.

In some embodiments, as shown in sequence number 1 in Table 1, the control unit 100 includes a traction motor drive circuit 2a, an engine drive circuit 2c, and a throttle signal sampling circuit 3c.

Table 1

| Sequence number of combinations | Composition of control unit | |
|---|---|---|
| | Common composition | Variable composition |
| 1 | Master chip | Traction motor drive circuit + engine drive circuit + throttle signal sampling circuit |
| 2 | | Traction motor drive circuit + first DC-DC converter drive circuit + generation motor drive circuit |
| 3 | | Traction motor drive circuit + First DC-DC converter drive circuit + generation motor drive circuit + Transmissioncircuit + generation motor drive circuit + Transmission drive circuit + Throttle signal sampling circuit |

In this embodiment, the master chip 1 is configured to: receive a throttle signal sent by the throttle signal sampling circuit 3c, determine output torque of a traction motor M1 and an engine M3 based on the throttle signal, send a traction motor drive signal to the traction motor drive circuit 2a based on the output torque of the traction motor M1, and send an engine drive signal to the engine drive circuit 2c based on the output torque of the engine M2.

By combining the traction motor drive circuit 2a, the engine drive circuit 2c, and the throttle signal sampling circuit 3c, original signal transmission between the three control units (the traction motor control unit, the vehicle control unit, and the engine control unit) is time-consuming, and may be integrated into internal signal transmission in one control unit, which saves signal transmission time, and therefore, the engine M3 and the traction motor M1 may quickly respond to the throttle signal.

In some embodiments, as shown in sequence number 2 in Table 1, the control unit 100 includes the traction motor drive circuit 2a, the first DC-DC converter drive circuit 3a, and the generation motor drive circuit 2c.

By combining the traction motor drive circuit 2a, the first DC-DC converter drive circuit 3a, and the generation motor drive circuit 2c, integration of the traction motor control unit, the generation motor control unit, and the DC-DC control unit is implemented. Because control logics and control circuits of the three control units are consistent, integration of the control units enables component reuse to reduce costs and decrease a code quantity, and computing power required by these three control units is relatively low.

In some embodiments, as shown in sequence number 3 in Table 1, the control unit 100 includes the traction motor drive circuit 2a, the first DC-DC converter drive circuit 3a, the generation motor drive circuit 2b, the transmission drive circuit 3b, and the throttle signal sampling circuit 3c.

By combining the traction motor drive circuit 2a, the first DC-DC converter drive circuit 3a, the generation motor drive circuit 2b, the transmission drive circuit 3b, and the throttle signal sampling circuit 3c, integration of the traction motor control unit, the generation motor control unit, the transmission control unit, the DC-DC control unit, and the vehicle control unit can be implemented. Because control logics and control circuits of the five control units are consistent, components may be reused to reduce costs and decrease a code quantity, and required computing power is relatively low.

In some embodiments, as shown in FIG. 2, the control unit 100 further includes:

a first PWM signal output module 4a, separately connected to the master chip 1 and the traction motor drive circuit 2a, and configured to output, under the control of the master chip 1, a first PWM signal to the traction motor drive circuit 2a, so as to drive the traction motor M1 to work;

a second PWM signal output module 4b, separately connected to the master chip 1 and the generation motor drive circuit 2b, and configured to output, under the control of the master chip 1, a second PWM signal to the generation motor drive circuit 2b, so as to drive the generation motor M2 to work; and

a third PWM signal output module 4c, separately connected to the master chip 1 and the first DC-DC converter drive circuit 3a, and configured to output, under the control of the master chip 1, a third PWM signal to the first DC-DC converter drive circuit 3a, so as to control the first DC-DC converter 200 to work.

In some embodiments, as shown in FIG. 2, the control unit 100 further includes the first electronic control module 5a, the second electronic control module 5b, and the first DC-DC converter 310.

The first electronic control module 5a is separately connected to the traction motor drive circuit 2a and the traction motor M1, and the traction motor drive circuit 2a is configured to control, based on the first PWM signal, the first electronic control module 4a to work, so as to drive the traction motor M1 to work.

The second electronic control module 5b is separately connected to the generation motor drive circuit 2b and the generation motor M2, and the generation motor drive circuit 2b is configured to control, based on the second PWM signal, the second electronic control module 5b to work, so as to drive the generation motor M2 to work.

The first DC-DC converter 310 is connected to the first DC-DC converter drive circuit 3a, and the first DC-DC converter drive circuit 3a is configured to control, based on the third PWM signal, the first DC-DC converter 310 to work.

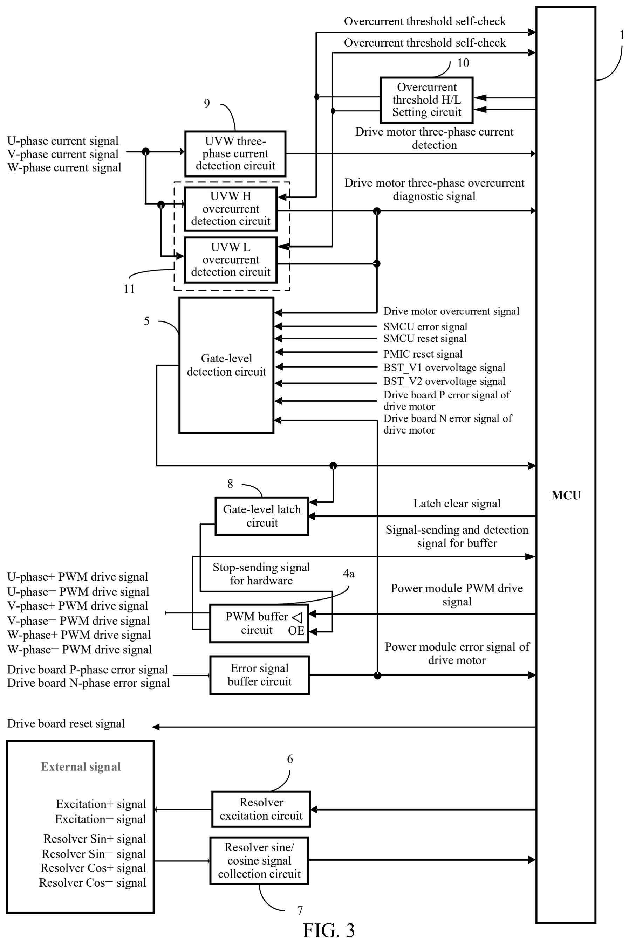

In some embodiments, as shown in FIG. 3, the control unit 100 further includes a first resolver excitation circuit 6 and a first resolver signal collection circuit 7 that are connected to the master chip 1. The first resolver excitation circuit 6 is configured to output, under the control of the master chip 1, a first excitation signal to a first resolver disposed corresponding to the traction motor M1, so as to supply a stator power source to a stator of the traction motor M1. The first resolver signal collection circuit 7 is configured to collect a resolver signal of the first resolver.

In this embodiment, the master chip 1 is further configured to: obtain a rotor position and angle of the traction motor M1 based on the resolver signal collected by the first resolver signal collection circuit 7, and control, based on the rotor position and angle of the traction motor M1, the first PWM signal output module 4a to output the first PWM signal.

In some embodiments, as shown in FIG. 3, the control unit 100 further includes: a first gate-level detection circuit 5 connected to the master chip 1, and configured to send an error signal upon receiving any one of a traction motor overcurrent signal, a DC-DC battery side overvoltage signal, a DC-DC bus side overvoltage signal, and a traction motor drive circuit error signal.

The master chip 1 is further configured to prohibit the first PWM signal output module 4a from outputting the first PWM signal upon receiving the error signal sent by the first gate-level detection circuit 5.

In some embodiments, as shown in FIG. 3, the control unit 100 further includes a first gate-level latch circuit 8. The first gate-level latch circuit 8 is separately connected to the first gate-level detection circuit 5 and the first PWM signal output module 4a, and is configured to continuously output a stop-output signal to the first PWM signal output module 4a after receiving the error signal sent by the first gate-level detection circuit 5, so as to prohibit the first PWM signal output module 4a from outputting the first PWM signal.

According to this embodiment, the first gate-level detection circuit 5 is further connected to the master chip 1, and is configured to stop outputting the stop-output signal upon receiving a latch clear signal sent by the master chip 1.

Specifically, after at least one of the following faults occurs: traction motor overcurrent, DC-DC battery side overvoltage, DC-DC bus side overvoltage, and error in traction motor drive circuit, the first gate-level latch circuit 8 is triggered to latch, and a hardware stop-output signal is sent to the first PWM signal output module 4a, and the master chip 1 is triggered to limit torque or stop PWM outputs or first limit torque and then stop PWM outputs for the traction motor M1, where the master chip 1 further sends the latch clear signal to the first gate-level latch circuit 8 after the fault is cleared, so that the first gate-level latch circuit 8 stops sending the hardware stop-output signal.

Specifically, with reference to FIG. 3, for TMCU, during power-on self-test or operation of the control unit 100, the master chip 1 diagnoses initial statuses of software and hardware of the system. When it is determined that there is no TMCU overcurrent, BDC battery side overvoltage, BDC bus side overvoltage, error in drive board, or other faults, and each circuit of the hardware is normal, after the master chip 1 receives an application layer signal-sending and torque request via a CAN, the first PWM signal output module 4a and the traction motor drive circuit 2a are enabled. Based on a sine/cosine signal collected by the resolver, a rotor position and angle of the traction motor M1 is obtained by using an algorithm, and PWM drive signals (U-phase+, U-phase-, V-phase+, V-phase-, W-phase+, W-phase-) are sent to the first electronic control module 5a. The master chip 1 implements, by using a software magnetic field oriented control (Field Oriented Control, FOC) algorithm, precise control of the traction motor M1 based on an angle and a rotational speed value output by resolver decoding.

In this process, the master chip 1 may monitor a TMCU overcurrent signal, an SMCU error signal, an SMCU reset signal, a PMIC reset signal, a BST_V1 (BDC battery side) overvoltage signal, a BST_V2 (BDC bus side) overvoltage signal, and a TMCU drive board P/N-phase error signal via the first gate-level detection circuit 5 in real time. When one or more fault occur, the first gate-level latch circuit 8 latches the PWM signal of the traction motor M1. The master chip 1 limits torque or stops PWM outputs or first limits torque and then stops PWM outputs for TMCU, and sends a latch clear signal when the fault is cleared, and the system is in a normal waiting state.

In some embodiments, as shown in FIG. 3, the control unit 100 further includes: a first hardware overcurrent threshold setting circuit 10 and a first overcurrent detection circuit 11.

With reference to FIG. 3, the first overcurrent detection circuit 11 is separately connected to the master chip 1 and the first gate-level detection circuit 5. The first hardware overcurrent threshold setting circuit 10 is separately connected to the master chip 1 and the first overcurrent detection circuit 11, and is configured to provide, under the control of the master chip 1, a first hardware current threshold for the first overcurrent detection circuit 11, so that the first overcurrent detection circuit 11 separately sends a traction motor overcurrent signal to the master chip 1 and the first gate-level detection circuit 5 when it is determined that the traction motor M1 is overcurrent based on the first hardware current threshold and a sampled traction motor current.

In some embodiments, with reference to FIG. 3, the control unit 100 further includes: a first current detection circuit 9, connected to the master chip 1, and configured to collect a traction motor current, where the master chip 1 is further configured to determine that the traction motor M1 is overcurrent when the traction motor current is greater than a first software current threshold, and the first software current threshold is smaller than the first hardware current threshold.

Specifically, with reference to FIG. 3, to ensure reliability of overcurrent diagnosis, dual overcurrent diagnosis is set, including: software overcurrent comparison and hardware overcurrent comparison. In addition, a software overcurrent threshold (that is, the first software current threshold) is smaller than a hardware overcurrent threshold (that is, the first hardware current threshold), so that software processing is faster than hardware processing.

In an implementation, for hardware overcurrent diagnosis, with reference to FIG. 3, overcurrent diagnosis may be further separately set for high and low sides of the traction motor M1, to further ensure reliability of the overcurrent diagnosis.

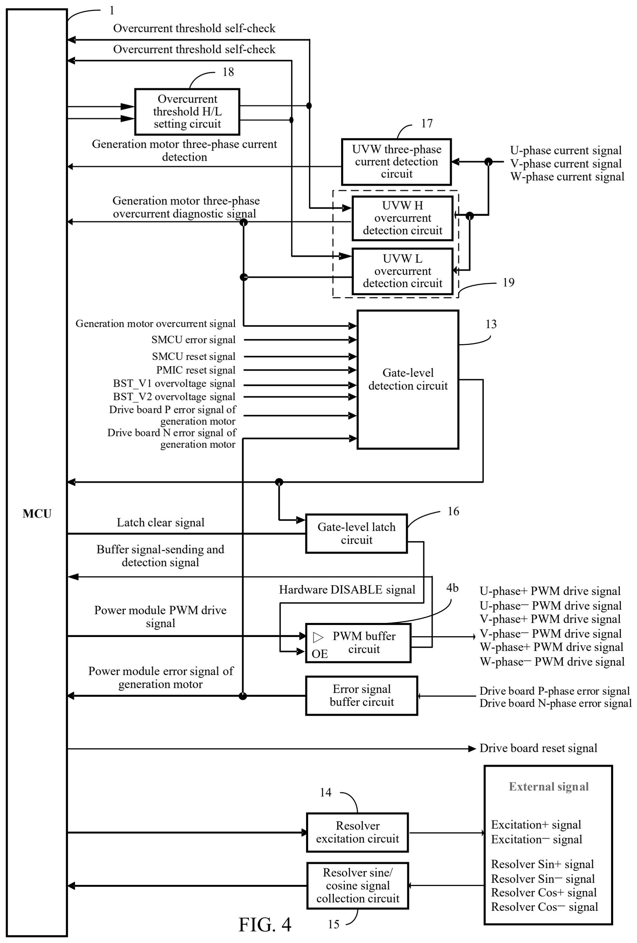

In some embodiments, as shown in FIG. 4, the control unit 100 further includes a second resolver excitation circuit 14 and a second resolver signal collection circuit 15 that are connected to the master chip 1. The second resolver excitation circuit 14 is connected to the master chip 1, and is configured to output, under the control of the master chip 1, a second excitation signal to a second resolver disposed corresponding to the generation motor M2, so as to supply a stator power source to a stator of the generation motor M2. The second resolver signal collection circuit 15 is connected to the master chip 1, and is configured to collect a resolver signal of the second resolver.

The master chip 1 is further configured to obtain a rotor position and angle of the generation motor M2 based on the resolver signal collected by the second resolver signal collection circuit 15, and control, based on the rotor position and angle of the generation motor M2, the second PWM signal output module 4b to output the second PWM signal.

In some embodiments, as shown in FIG. 4, the control unit 100 further includes: a second gate-level detection circuit 13, connected to the master chip 1, and configured to send an error signal upon receiving any one of a generation motor overcurrent signal, a DC-DC battery side overvoltage signal, a DC-DC bus side overvoltage signal, and a generation motor drive circuit error signal.

The master chip 1 is further configured to prohibit the second PWM signal output module 4b from outputting the second PWM signal upon receiving the error signal sent by the second gate-level detection circuit 13.

Specifically, when the master chip 1 determines via the second gate-level detection circuit 13 that there is no generation motor overcurrent, DC-DC battery side overvoltage, DC-DC bus side overvoltage, and error in generation motor drive circuit, after a second torsion request is received, the second PWM signal output module 4b and the generation motor drive circuit 2b are enabled, the rotor position and angle of the generation motor M2 is obtained based on the resolver signal collected by the second resolver signal collection circuit 15, and the second PWM drive signal is sent to the second electronic control module 5b, so as to control the generation motor M2.

In some embodiments, as shown in FIG. 4, the control unit 100 further includes a second gate-level latch circuit 16. The second gate-level latch circuit 16 is separately connected to the second gate-level detection circuit 13 and the second PWM signal output module 4b, and is configured to continuously output a stop-output signal to the second PWM signal output module 4b after receiving the error signal sent by the second gate-level detection circuit 13, so as to prohibit the second PWM signal output module 4b from outputting the second PWM signal.

In some embodiments, the second gate-level latch circuit 16 is further connected to the master chip 1, and is configured to stop outputting the stop-output signal upon receiving a latch clear signal sent by the master chip 1.

Specifically, the second gate-level detection circuit 13 is further configured to: trigger the second gate-level latch circuit 16 to latch after at least one of the following faults occurs: generation motor overcurrent, DC-DC battery side overvoltage, DC-DC bus side overvoltage, and error in generation motor drive circuit, send a hardware stop-output signal to the second PWM signal output module 12, and trigger the master chip 1 to limit torque or stop PWM outputs or first limit torque and then stop PWM outputs for the generation motor M2, where the master chip 1 is further configured to send a latch clear signal to the second gate-level latch circuit 16 after the fault is cleared, so that the second gate-level latch circuit 16 stops sending the hardware stop-output signal.

Specifically, with reference to FIG. 4, for GMCU, during power-on self-test or operation of the control unit 100, the master chip 1 diagnoses initial statuses of software and hardware of the system. When it is determined that there is no GMCU overcurrent, BDC battery side overvoltage, BDC bus side overvoltage, error in drive board, or other faults, and each circuit of the hardware is normal, after the master chip 1 receives an application layer signal-sending and torque request via the CAN, the second PWM signal output module 4b and the generation motor drive circuit 4b are enabled. Based on a sine/cosine signal collected by the resolver, a rotor position and angle of the motor is obtained by using an algorithm, and PWM drive signals (U-phase+, U-phase-, V-phase+, V-phase-, W-phase+, W-phase-) are sent to the second electronic control module 5b. The master chip 1 implements, by using a software FOC algorithm, precise control of the generation motor M2 based on an angle and a rotational speed value output by resolver decoding.

In this process, the master chip 1 may monitor, via the second gate-level detection circuit 13, a GMCU overcurrent signal, an SMCU error signal, an SMCU reset signal, a PMIC reset signal, a BST_V1 (BDC battery side) overvoltage signal, a BST_V2 (BDC bus side) overvoltage signal, and a GMCU drive board P/N-phase error signal in real time. When one or more fault occur, the second gate-level latch circuit 16 latches the PWM signal of the generation motor M2. The master chip 1 limits torque or stops PWM outputs or first limits torque and then stops PWM outputs for the GMCU, and sends a latch clear signal when the fault is cleared, and the system is in a normal waiting state.

In some embodiments, as shown in FIG. 4, the control unit 100 further includes: a second hardware overcurrent threshold setting circuit 18 and a second overcurrent detection circuit 19. The second overcurrent detection circuit 19 is separately connected to the master chip 1 and the second gate-level detection circuit 13. The second hardware overcurrent threshold setting circuit 18 is separately connected to the master chip 1 and the second overcurrent detection circuit 19, and is configured to provide, under the control of the master chip 1, a second hardware current threshold for the second overcurrent detection circuit 19, so that the second overcurrent detection circuit 19 separately sends a generation motor overcurrent signal to the master chip 1 and the second gate-level detection circuit 13 when it is determined that the generation motor M2 is overcurrent based on the second hardware current threshold and a sampled generation motor current.

In some embodiments, with reference to FIG. 4, the control unit 100 further includes: a second current detection circuit 17, connected to the master chip 1, and configured to collect a generation motor current, where the master chip 1 is further configured to determine that the generation motor M2 is overcurrent when the generation motor current is greater than a second software current threshold, and the second software current threshold is smaller than the second hardware current threshold.

Specifically, with reference to FIG. 4, to ensure reliability of overcurrent diagnosis, dual overcurrent diagnosis is set, including: software overcurrent comparison and hardware overcurrent comparison. In addition, a software overcurrent threshold (that is, the first software current threshold) is smaller than a hardware overcurrent threshold (that is, the first hardware current threshold), so that software processing is faster than hardware processing.

In an implementation, for hardware overcurrent diagnosis, with reference to FIG. 4, overcurrent diagnosis may be further separately set for high and low sides of the generation motor M2, to further ensure reliability of the overcurrent diagnosis.

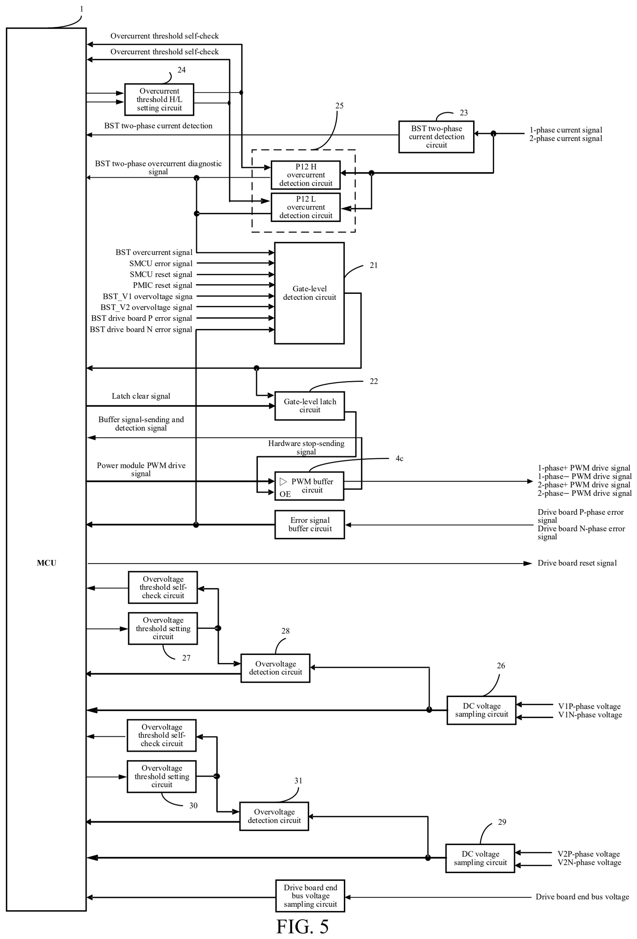

In some embodiments, as shown in FIG. 5, the control unit 100 further includes a third gate-level detection circuit 21 connected to the master chip 1, and configured to send an error signal upon receiving any one of a DC-DC overcurrent signal, a DC-DC battery side overvoltage signal, a DC-DC bus side overvoltage signal, and a first DC-DC converter drive circuit error signal.

The master chip 1 is further configured to prohibit the third PWM signal output module 4c from outputting the third PWM signal upon receiving the error signal sent by the third gate-level detection circuit 21.

Specifically, when the master chip 1 determines via the third gate-level detection circuit 21 that there is no generation motor overcurrent, DC-DC battery side overvoltage, DC-DC bus side overvoltage, and error in first DC-DC converter drive circuit 3a, after a boost request or step-down request is received, the third PWM signal output module 20 is enabled, and the third PWM drive signal is sent to the DC-DC converter drive circuit, so as to implement boost or step-down control of the DC-DC converter.

In some embodiments, as shown in FIG. 5, the control unit 100 further includes a third gate-level latch circuit 22, separately connected to the third gate-level detection circuit 21 and the third PWM signal output module 4c, and configured to continuously output a stop-output signal to the third PWM signal output module 4c after receiving the error signal sent by the third gate-level detection circuit 21, so as to prohibit the third PWM signal output module 4c from outputting the third PWM signal.

In an implementation, with reference to FIG. 5, the third gate-level latch circuit 22 is further connected to the master chip 1, and is configured to stop outputting the stop-output signal upon receiving a latch clear signal sent by the master chip 1.

Specifically, after at least one of the following faults occurs: DC-DC overcurrent, DC-DC battery side overvoltage, DC-DC bus side overvoltage, and error in DC-DC converter drive circuit, the third gate-level detection circuit 2122 triggers the third gate-level latch circuit 22 to latch, a hardware stop-output signal is sent to the third PWM signal output module 20, and the master chip 1 is triggered to control the DC-DC converter to enter a stop-output mode or pass-through mode, where the master chip 1 is further configured to send a latch clear signal to the third gate-level latch circuit 22 after the fault is cleared, so that the third gate-level latch circuit 22 stops sending the hardware stop-output signal.

Specifically, with reference to FIG. 5, for BDC, during power-on self-test or operation, the control unit 100 diagnoses initial statuses of software and hardware of the system. If there is no fault in brackets (faults including BST overcurrent, BDC battery side overvoltage, BDC bus side overvoltage, and error in driver board, or the like), and each circuit of the hardware is normal, when in driving, after the master chip 1 receives an application layer boost instruction request via the CAN, the third PWM signal output module 20 and the first DC-DC converter drive circuit 3a are enabled, and PWM drive signals (1-phase+, 1-phase-, 2-phase+, 2-phase-) are sent to the first DC-DC converter drive circuit 3a, to boost the first DC-DC converter 310 in BDC to a required voltage. When in electricity generation, the generation motor M2 generates electricity and supply power to the low-voltage storage battery 400 for storage. After the master chip 1 receives an application layer step-down instruction request via the CAN, the third PWM signal output module 20 and the second DC-DC converter drive circuit 3d are enabled, and PWM drive signals (1-phase+, 1-phase-, 2-phase+, 2-phase-) are sent to the second DC-DC converter drive circuit 3d to buck the second DC-DC converter 320 in BDC, so as to buck a voltage supplied by the generation motor M2 to a charging voltage of the low-voltage storage battery 400.

In this process, the master chip 1 may monitor, via the third gate-level detection circuit 21, an overcurrent signal of BDC, an overvoltage signal of BST_V1 (BDC battery side), an overvoltage signal of BST_V2 (BDC bus side), a BDC drive board P/N-phase error signal, an overtemperature signal of capacitor V1, an overtemperature signal of capacitor V2, an overtemperature signal of inductor 1, and an overtemperature signal of inductor 2 in real time. When one or more faults occurs, BDC enters a stop-output mode or pass-through mode, and a latch clear signal is sent when the fault is cleared, and the system is in a normal request waiting state.

In some embodiments, as shown in FIG. 5, the control unit 100 further includes: a third hardware overcurrent threshold setting circuit 24 and a third overcurrent detection circuit 25. The third overcurrent detection circuit 25 is separately connected to the master chip 1 and a third gate-level detection circuit 21. The third hardware overcurrent threshold setting circuit 24 is separately connected to the master chip 1 and the third overcurrent detection circuit 25, and is configured to provide, under the control of the master chip 1, a third hardware current threshold for the third overcurrent detection circuit 25, so that the third overcurrent detection circuit 25 separately sends a DC-DC overcurrent signal to the master chip 1 and the third gate-level detection circuit 21 when it is determined that the first DC-DC converter 200 is overcurrent based on the third hardware current threshold and a sampled current of the first DC-DC converter 200.

In some embodiments, with reference to FIG. 5, the control unit 100 further includes: a third current detection circuit 23, connected to the master chip 1, and configured to collect a current of the first DC-DC converter, where the master chip 1 is further configured to determine that the first DC-DC converter is overcurrent when the current of the first DC-DC converter is greater than a third software current threshold, and the third software current threshold is smaller than the third hardware current threshold.

Specifically, with reference to FIG. 5, to ensure reliability of overcurrent diagnosis, dual overcurrent diagnosis is set, including: software overcurrent comparison and hardware overcurrent comparison. In addition, a software overcurrent threshold (that is, the first software current threshold) is smaller than a hardware overcurrent threshold (that is, the first hardware current threshold), so that software processing is faster than hardware processing.

In an implementation, for hardware overcurrent diagnosis, with reference to FIG. 5, overcurrent diagnosis may be further separately set for high and low sides of the DC-DC converter 300, to further ensure reliability of the overcurrent diagnosis.

In some embodiments, as shown in FIG. 5, the control unit 100 further includes: a first voltage sampling circuit 26, a first hardware voltage threshold setting circuit 27, and a first overvoltage detection circuit 28.

With reference to FIG. 5, the first voltage sampling circuit 26 is configured to sample a DC-DC battery side voltage. The first overvoltage detection circuit 28 is separately connected to the first voltage sampling circuit 26, the master chip 1, and the gate-level detection circuits (including the first gate-level detection circuit 5, the second gate-level detection circuit 13, and the third gate-level detection circuit 21). The first hardware voltage threshold setting circuit 27 is separately connected to the master chip 1 and the first overvoltage detection circuit 28, and is configured to provide, under the control of the master chip 1, a first hardware voltage threshold for the first overvoltage detection circuit 29, so that the first overvoltage detection circuit 28 separately sends a DC-DC battery side overvoltage signal to the master chip 1 and the gate-level detection circuits when it is determined that a DC-DC battery side is overvoltage based on the first hardware voltage threshold and the DC-DC battery side voltage.

In some embodiments, as shown in FIG. 5, the control unit 100 further includes: a second voltage sampling circuit 29, a second hardware voltage threshold setting circuit 30, and a second overvoltage detection circuit 31.

The second voltage sampling circuit 29 is configured to sample a DC-DC bus side voltage. The second overvoltage detection circuit 31 is separately connected to the second voltage sampling circuit 29, the master chip 1 and the gate-level detection circuits. The second hardware voltage threshold setting circuit 30 is separately connected to the master chip 1 and the second overvoltage detection circuit 31, and is configured to provide, under the control of the master chip 1, a second hardware voltage threshold for the second overvoltage detection circuit 31, so that the second overvoltage detection circuit 31 separately sends a DC-DC bus side overvoltage signal to the master chip 1 and the gate-level detection circuits when it is determined that a DC-DC bus side is overvoltage based on the second hardware voltage threshold and the DC-DC bus side voltage.

Specifically, with reference to FIG. 5, similar to overcurrent diagnosis, software overvoltage diagnosis (software overvoltage diagnosis on BST_V1 (BDC battery side) not shown in FIG. 5) and hardware overvoltage diagnosis may be set corresponding to a voltage on BST_V1 (BDC battery side) and a voltage on BST_V2 (BDC bus side).

It should be noted that, with reference to FIG. 3, FIG. 4, and FIG. 5, to ensure accuracy and reliability of overvoltage and overcurrent diagnoses, the master chip 1 may perform self-test on the hardware threshold output by the threshold setting circuit.

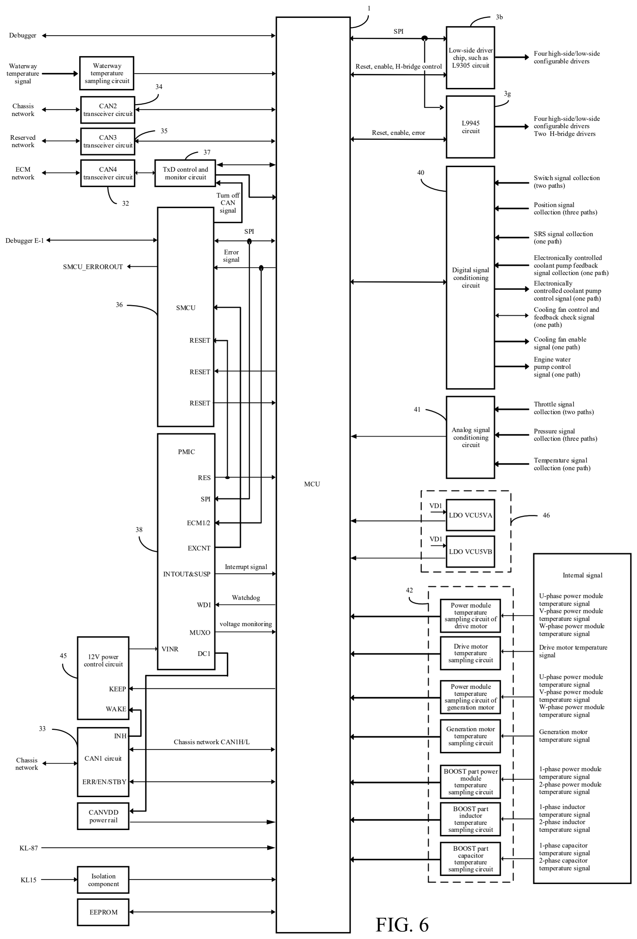

In some embodiments, as shown in FIG. 6, the control unit 100 further includes a first CAN transceiver circuit 32 connected to the master chip 1. The first CAN transceiver circuit 32 is configured to implement CAN communication between the master chip and an energy network of the vehicle.

Specifically, the master chip 1 communicates with each control unit of the energy network of the vehicle via the first CAN transceiver circuit 32, to receive a first torque request, a second torque request, a boost request, and a step-down request, so as to implement power-on/off control, power generation control, and power limitation control of the vehicle.

In some embodiments, as shown in FIG. 6, the control unit 100 further includes a second CAN transceiver circuit 33 and a third CAN transceiver circuit 34 that are connected to the master chip 1. The second CAN transceiver circuit 33 is configured to implement CAN communication between the master chip and a chassis network of the vehicle, so as to receive a gear signal from a gear control unit to implement vehicle mode control. The third CAN transceiver circuit 34 is configured to implement CAN communication between the master chip and an ECM network of the vehicle, so as to implement generation traction motor start/stop, torque control, torque compensation, torque distribution, and torque limitation.

In an implementation, with reference to FIG. 6, the control unit 100 further includes a fourth CAN transceiver circuit 35, and the fourth CAN transceiver circuit 35 is a reserved CAN transceiver circuit.

Specifically, with reference to FIG. 6, the control unit 100 may support four-channel CAN communication functions, including four-channel CAN transceiving functions, which separately communicate with a backbone network in a vehicle network, to implement a CAN signal input function and a CAN signal output function. Communication with each control unit of the chassis network is achieved via CAN1 (that is, the second CAN transceiver circuit 33), to receive the gear signal of the gear control unit, so as to implement vehicle mode control. Communication with each control unit of the energy network is achieved via CAN2 (that is, the first CAN transceiver circuit 32), to implement functions such as power-on/off control, power generation control, and power limitation of the vehicle. Communication with each control unit of the ECM network is achieved via CAN4 (that is, the third CAN transceiver circuit 34), to implement functions such as traction motor start/stop, torque control, torque compensation, torque distribution, and torque limitation. CAN3 (that is, the fourth CAN transceiver circuit 35) is a reserved network, which reserves space for expanding other function controls of the vehicle. CAN1 may have a wake-up function. An INH pin of CAN1 may be used as a wake-up source to wake up the master chip 1 in a sleep state. The master chip 1 may alternatively implement own sleep by setting an STB pin of the CAN1 circuit to a low value.

In some embodiments, as shown in FIG. 6, the control unit 100 further includes an auxiliary chip 36 and a monitoring circuit 37. The monitoring circuit 37 is separately connected to the third CAN transceiver circuit 34, the master chip 1, and the auxiliary chip 36.

The master chip 1 is further configured to send a CAN turn-off signal to the monitoring circuit 37 via the auxiliary chip 36 when the ECM network is abnormal, so as to turn off the third CAN transceiver circuit 34 by the monitoring circuit 37.

Specifically, with reference to FIG. 6, to implement functional safety requirements of the vehicle, an SMCU chip (that is, the auxiliary chip 36) design is added to implement functional safety-related algorithm processing at a software layer, including: designing a monitoring circuit 37 between a CAN4 network and the master chip 1, and turning off CAN4 in time via SMCU when the master chip 1 monitors that ECM of the vehicle is abnormal, to ensure functional safety of the vehicle.

In some embodiments, as shown in FIG. 6, a main control board of the control unit 100 further includes a power management chip 38. The master chip 1 is separately connected to the power management chip 38 and the auxiliary chip 36, and is further configured to reset the master chip 1 via the auxiliary chip 36 and the power management chip 38 when an error is reported.

Specifically, with reference to FIG. 6, SMCU and PMIC share one SPI to communicate with the master chip 1. An error signal of the master chip 1 may be sent to both SMCU and PMIC. After receiving the error signal, SMCU and PMIC may reset the master chip 1 in time. In an implementation, to ensure security of the master chip 1 and SMCU, PMIC may reset MCU and SMCU via a RES pin. Each power rail voltage output by PMIC may also be monitored in real time by the master chip 1.

In some embodiments, as shown in FIG. 6, the control unit 100 further includes a driver chip 3g connected to the master chip. The driver chip 3g is configured to drive, under the control of the master chip 1, a clutch pressure valve, a main pressure solenoid, and a supercooling protection solenoid of a transmission system.

Specifically, a transmission drive circuit 3b has four high-side and low-side drivers, and the driver chip 3g has four high-side and low-side drivers and two H-bridge drivers. The master chip 1 is further configured to drive a plurality of high-current valve bodies and small motors of the vehicle by controlling the transmission drive circuit 3b and the driver chip 3g.

Specifically, with reference to FIG. 6, a vehicle control unit (Vehicle control unit, VCU) of the control unit 100 has relatively extensive hardware resources. In a high-current drive design, an L9305 chip and an L9945 chip may be used as a driver chip. The master chip 1 sends control commands to the integrated driver chips L9305 and L9945 via SPI communication. The integrated driver chip L9305 has four high-side/low-side configurable drivers, and the integrated driver chip L9945 has four high-side and low-side configurable drivers and two H-bridge drivers, thereby implementing drive control of the plurality of high-current valve bodies (such as a clutch pressure valve, a main pressure solenoid, a supercooling protection solenoid) and small motors (such as small motors for a game vehicle function) in an automatic transmission control unit (Transmission Control unit, TCU).

In some embodiments, the control unit 100 further includes a sampling circuit, configured to sample at least one of the following signals: a pressure signal sampling signal, a temperature sampling signal, a switch signal, a position signal, a collision signal, an electronically controlled coolant pump feedback signal, a waterway temperature, a traction motor temperature, a generation motor temperature, a first electronic control module temperature, a second electronic control module temperature, and a DC-DC converter temperature.

Specifically, as shown in FIG. 6, the control unit 100 includes a digital signal conditioning circuit 40, an analog signal conditioning circuit 41, and a plurality of temperature sampling circuits 42 that are connected to the master chip 1. The master chip 1 is configured to: receive a throttle pedal sampling signal, a pressure signal sampling signal, and a temperature sampling signal via the analog signal conditioning circuit 40, and receive a switch signal, a position signal, a collision signal, and an electronically controlled coolant pump feedback signal via the digital signal conditioning circuit 41, so as to complete collection of the foregoing signals by the vehicle; and sample a waterway temperature, a traction motor temperature, a generation motor temperature, a first electronic control module temperature, a second electronic control module temperature, and a DC-DC converter temperature via the plurality of temperature sampling circuits 42, and control an actuator in a thermal management system of the vehicle via the digital signal conditioning circuit 41 to dissipate heat when it is determined that the vehicle needs to dissipate heat based on the temperatures sampled by the plurality of temperature sampling circuits 42, where the actuator in the thermal management system includes at least one of a coolant pump, a traction motor coolant pump, and a cooling fan.

Specifically, with reference to FIG. 6, the control unit 100 has a multi-channel digital quantity collection function and analog quantity collection function. Part of analog channels of VCU supports two throttle pedal sampling paths (for implementing redundant control), three pressure signal sampling paths (valve body pressure in the TCU system), and one temperature sampling path (an oil temperature in the TCU system). A digital channel of an all-in-one control unit supports two switch signal sampling paths, two position signal sampling paths (two motor positions of a game vehicle function), one collision signal (SRS signal) sampling path, one electronically controlled coolant pump feedback signal sampling path, one electronically controlled coolant pump control output signal path, one cooling fan control and feedback test (in the same line) path, one cooling fan enable signal path, and one traction motor water pump control output signal path, to complete collection and control of the foregoing signals by the vehicle.

The control unit 100 may support a waterway temperature sampling function, a TMCU motor temperature sampling function, a GMCU motor temperature sampling function, a GMCU power module (that is, the second electronic control module 5b) temperature sampling function, and a TMCU power module (that is, the first electronic control module 5a) temperature sampling function. The DC-DC converter may include a power module 1 (that is, the foregoing first DC-DC converter 310) and a power module 2 (that is, the foregoing second DC-DC converter 320) of BDC, a capacitor 1 and an inductor 1 corresponding to the power module 1, and a capacitor 2 and an inductor 2 corresponding to the power module 2. The control unit 100 may further support temperature sampling functions for the power module 1 and the power module 2 of BDC, temperature sampling functions for the capacitor 1 and the capacitor 2 of BDC, and temperature sampling functions for the inductor 1 and the inductor 2 of BDC. Then, by collecting signals such as the heat dissipation waterway temperature, the DC-DC temperature, the power module temperatures of the generation motor and the traction motor, the generation motor temperature, and the traction motor temperature, actuators such as an electronic thermostat, the coolant pump, the traction motor coolant pump, the cooling fan may be controlled to perform heat dissipation based on heat dissipation requirements of the vehicle, so as to implement a thermal management function.

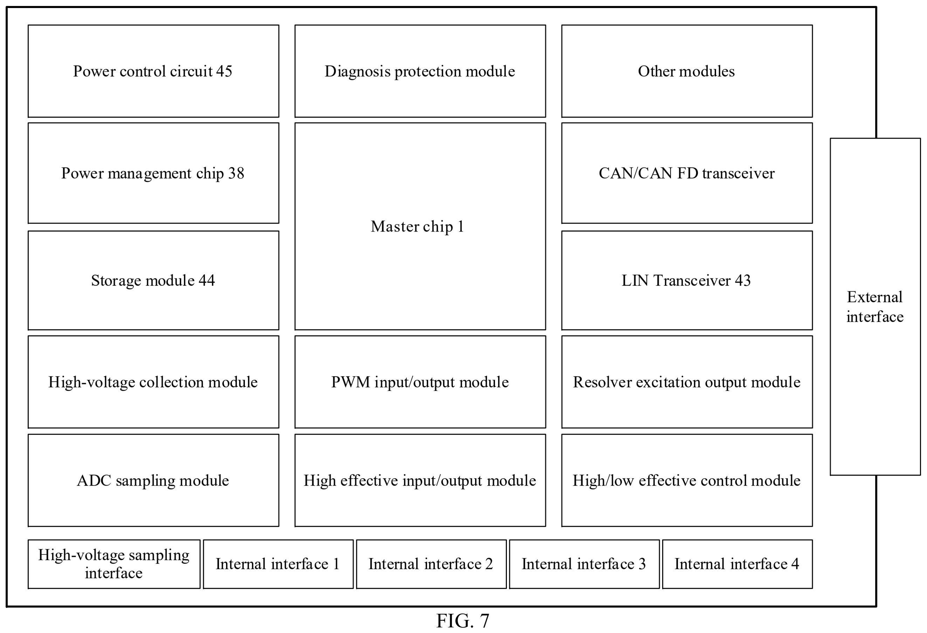

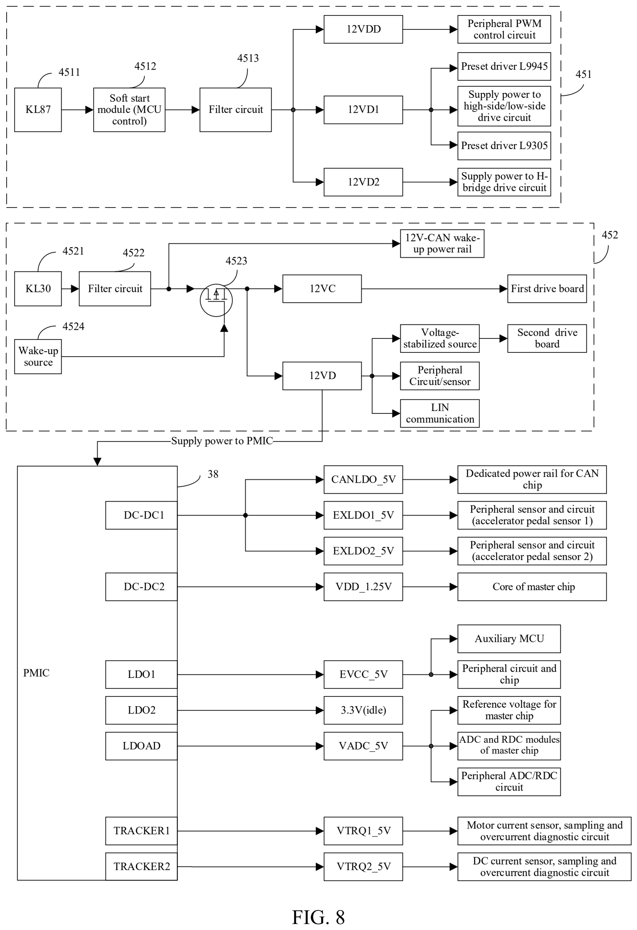

In some embodiments, as shown in FIG. 7 and FIG. 8, the control unit 100 further includes: an LIN transceiver 43 and a storage module 44.

The LIN transceiver 45 is connected to the master chip 1, and is configured to connect to an external control unit, so as to implement communication between the master chip 1 and the external control unit by using a LIN protocol. The storage module 44 is connected to the master chip 1, and is configured to store data generated by the master chip 1 during a working process.

In some embodiments, as shown in FIG. 7 and FIG. 8, the control unit 100 further includes: a power control circuit 45, separately connected to the second CAN transceiver circuit 33 and the power management chip 38, and configured to control a power source, after receiving a wake-up signal, to supply power to the power management chip 38, so as to wake up the master chip 1 via the power management chip 38, where the wake-up signal is generated by the second CAN transceiver circuit 33 based on a wake-up packet sent by the chassis network.

After being woken up, the master chip 1 outputs a power holding signal to the power control circuit 45, so that the power control circuit 45 continuously controls, under the control of the power holding signal, the power source to supply power to the power management chip 38.

With reference to FIG. 8, the power control circuit 45 is configured to provide a plurality of first voltages. The power management chip 38 is further configured to provide a plurality of second voltages and at least one third voltage based on one first voltage. The plurality of first voltages are used to supply power to a peripheral PWM signal output module, the transmission drive circuit 3b, the driver chip 3g, an H-bridge drive circuit, the first drive board, the second drive board, a peripheral sensor and circuit, the LIN transceiver 43, and the power management chip 38, and serve as a CAN wake-up power rail of the second CAN transceiver circuit 33, where the second CAN transceiver circuit 33 is further configured to provide a wake-up source for the power control circuit 45 based on the CAN wake-up power rail and an external ignition hardwire signal. The plurality of second voltages are used to supply power to a CAN/CAN FD transceiver, an accelerator pedal sensor, an external sensor and a corresponding sampling circuit thereof, an auxiliary chip 37, a peripheral circuit and chip, an ADC module and RDC module (Resolver-to-Digital Converter, resolver-to-digital converter chip) of the master chip 1, an ADC/RDC peripheral circuit, the first current detection circuit 9, the first overcurrent detection circuit 11, the second current detection circuit 17, the second overcurrent detection circuit 19, the third current detection circuit 23, and the third overcurrent detection circuit 25, and serve as a reference voltage of the master chip 1, where the CAN/CAN FD transceiver includes the first CAN transceiver circuit 32, the second CAN transceiver circuit 33, the third CAN transceiver circuit 34, and the fourth CAN transceiver circuit 35. The at least one third voltage is used to supply power to a core of the master chip 1.

The master chip 1 is further configured to: switch from a sleep state to an operation state after the second CAN transceiver circuit 33 provides the wake-up source, and switch from the operation state to the sleep state after receiving a sleep signal sent by the second CAN transceiver circuit 33.

In some embodiments, as shown in FIG. 8, the power control circuit 45 includes a first power distribution unit 451 and a second power distribution unit 452. The first power distribution unit 451 includes a first preset power source 4511, a soft start circuit 4512, and a first filter circuit 4513 that are sequentially connected. The first filter circuit 4513 outputs at least three first voltages, where at least one first voltage supplies power to a peripheral PWM control circuit, at least one first voltage supplies power to the transmission drive circuit 3b and the driver chip 3g, and at least one first voltage supplies power to the H-bridge drive circuit. The second power distribution unit 452 includes a second preset power source 4521, a second filter circuit 4522, a switch circuit 4523, and a wake-up source 4524. The second preset power source 4521 outputs at least one first voltage through the second filter circuit 4522 to serve as a CAN wake-up power rail. The wake-up source 4524 is connected to a control end of the switch circuit 4523. When the switch circuit 4523 is turned on under the control of the wake-up source 4524, the second preset power source 4521 outputs at least two first voltages through the second filter circuit 4522 and the switch circuit 4523 in sequence, where at least one first voltage supplies power to the first drive board, and at least one first voltage supplies power to the second drive board, the peripheral sensor and circuit, the LIN transceiver 43, and the power management chip 38.

Specifically, with reference to FIG. 8, the power control circuit 45 may be configured to implement 12 V power distribution. The 12 V power distribution may include a first preset power source 4511 (such as KL87) and a second preset power source 4521 (such as KL30). A KL87 power input first passes through the soft start circuit 4512, so that KL87 is controlled by the master chip 1, and is divided into three 12 V power rails after passing through the first filter circuit 4513, which are 12VDD, 12VD1, and 12VD2 respectively. The soft start circuit 4512 can effectively suppress a transient impulse current when the vehicle is started or in emergent power outage, to effectively protect the control unit 100. In addition, the soft start circuit 4512 further has an anti-reverse protection function. 12VDD that is output after filtering supplies power to the peripheral PWM control circuit. 12VD1 supplies power to driver chips L9945 and L9305 of the vehicle, and high-side and low-side drive circuits. 12VD2 supplies power to the H-bridge drive circuit. To prevent the H-bridge drive circuit from causing common-mode interference, 12VD1 and 12VD2 are distinguished. In addition, the H-bridge control circuit and power supply components may be selected for use according to different models, which can effectively reduce costs and improve adaptability and flexibility.

KL30 outputs three power rails in all through the anti-reverse protection circuit and the filter circuit, which are 12V-CAN, 12VD, and 12VC respectively. After filtering, KL30 directly outputs 12V-CAN as the CAN wake-up power rail. The CAN wake-up power rail and an external KL15 hardwire wake-up signal jointly serve as the wake-up source 4524 to control the switch MOS to be turned on. After MOS is turned on, two power rails 12VD and 12VC are output. The 12VC power rail supplies power to the second drive board. The second drive board is provided with a voltage-stabilized source module that can directly draw power from 12VC. 12VD supplies power to four modules, that is, separately supplies power to the first drive board, the peripheral sensor and circuit, the LIN transceiver 43, and the power management chip 38. The second drive board does not need to be stabilized by the master chip 1 to draw power.

In some embodiments, with reference to FIG. 8, the power management chip 38 is provided with a DC-DC1 port, a DC-DC2 port, an LDO1 port, an LDOAD port, a TRACKER1 port, and a TRACKER2 port, and is configured to:

output three second voltages through the DC-DC1 port, so as to respectively supply power to the CAN/CAN FD transceiver, the accelerator pedal sensor, and other external sensors and corresponding sampling circuits thereof;
output one third voltage through the DC-DC2 interface, so as to supply power to the core of the master chip 1;
output one second voltage through the LDO1 interface, so as to supply power to the auxiliary chip 36, and the peripheral circuit and chip;
output one second voltage through the LDOAD interface, so as to supply power to the ADC/RDC module and ADC/RDC peripheral circuit of the master chip 1, and to serve as the reference voltage of the master chip 1;
output one second voltage through the TRACKER1 interface, so as to supply power to the first current detection circuit 9, the first overcurrent detection circuit 11, the second current detection circuit 17, and the second overcurrent detection circuit 19; and
output one second voltage through the TRACKER2 interface, so as to supply power to the third current detection circuit 23 and the third overcurrent detection circuit 25.

Specifically, as shown in FIG. 8, the power management chip 38 may implement 5 V power distribution. The power management chip 38 draws power from 12VD, and has the capability of outputting seven power rails through the interfaces DC-DC 1, DC-DC2, LDO1, LDO2, LDOAD, TRACKER1, and TRACKER2 after internal processing of the chip.

DC-DC1 outputs a 5.7 V power rail. To meet safety requirements, the accelerator pedal sensor needs two dedicated power rails. Considering that the CAN/CAN FD transceiver consumes high current during operation and fault, if a solution of using dedicated power rails is not used, the master chip 1 may be powered off due to a CAN/CAN FD transceiver fault. Therefore, the DC-DC1 outputs three power rails CANLDO_5V, EXLDO1_5V, and EXLDO2_5V through three low-dropout regulator LDO chips, to separately supply power to the CAN/CAN FD transceiver, two accelerator pedal sensors (implementing two throttle pedal sampling paths), and other external 5 V sensors and corresponding sampling circuits thereof. DC-DC2 outputs a 1.25 V power rail, that is, VDD_1.25V is dedicated to supplying power to the core of the master chip 1. LDO1 outputs a 5 V power rail, that is, EVCC_5V, which is mainly used to supply power to the auxiliary chip 36, a peripheral 5 V circuit, and a 5 V chip. LDO2 outputs 3.3 V, and this power voltage is idle. LDOAD outputs a 5 V power rail. VADC_5V supplies power to the ADC and RDC modules, and peripheral ADC/RDC circuit. In addition, VADC_5V also functions as a reference voltage source of the master chip 1. TRACKER1 and TRACKER2 trace the LDOAD power rail, and an output is 5 V. VTRQ1 and VTRQ2 respectively supply power to current sensors, DC current sensors and corresponding detection circuits, and overcurrent detection circuits of dual motors.

In an implementation, with reference to FIG. 6, VCU may be further provided with two voltage monitoring circuits 46 to detect output voltages (that is, EXLDO1_5V and EXLDO2_5V described above) of the two 5 V LDOs in real time, so as to monitor power supply safety of a plurality of external 5 V sensors.

With reference to FIG. 7, in the control unit 100 of this disclosure, the master chip 1 is provided with a power management chip 38 (Power Management IC, PMIC) and a storage module 44 to maintain normal operation of the system. The control unit 100 may be provided with a high-voltage sampling interface (connected to the second voltage sampling circuit 29) and four internal interfaces (one is separately connected to the second PWM signal output module 4b and the third PWM signal output module 4c, one is connected to the first PWM signal output module 4a, one is connected to the temperature sampling circuits shown in FIG. 6, and one is connected to each current detection circuit shown in FIG. 3 to FIG. 5), and an external interface (connected to a circuit for collecting external signals), to collect and control signals inside the control unit and outside the control unit. Signals collected by the internal and external interfaces are converted by high-voltage sampling, ADC sampling, PWM input, high effective input, and other modules, and then transmitted to the master chip 1. After receiving sampled signals, the master chip 1 gives corresponding control instructions by calculation and decision-making. PWM output, high effective output, high/low effective control, CAN/CAN FD transceiver, LIN transceiver 43, and other modules convert the control instructions into corresponding control signals, and output the control signals through internal and external interfaces to implement closed-loop control. Functions of the control unit 100 are implemented based on sensors and actuators connected to the master chip 1. Signals collected by the sensors are input, processed by control algorithms for the functions of the control unit, and output to the actuators for execution. Sensor signal collection is divided into internal signal collection and external signal collection. An objective of internal signal collection is to monitor, diagnose, and thermally manage the control unit 100. A main objective of external signal collection is to obtain a driver intent to control torque output. Therefore, the control unit 100 of this disclosure uses one MCU (that is, the master chip 1) to replace a plurality of MCUs physically integrated in related technologies, and the MCU performs data calculation, decision-making, and control in a unified manner, thereby implementing integration of a plurality of functions of VCU+TCU+TMCU+GMCU+BDC, reducing circuit design complexity, and reducing overall hardware costs.

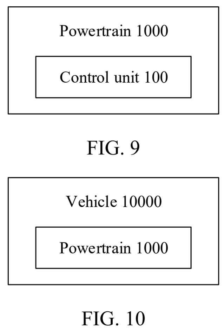

FIG. 9 is a block diagram of a structure of a powertrain according to an embodiment of this disclosure.

As shown in FIG. 9, the powertrain 1000 includes the control unit 100 in the foregoing embodiments.

FIG. 10 is a block diagram of a structure of a vehicle according to an embodiment of this disclosure.

As shown in FIG. 10 the vehicle 10000 includes the powertrain 1000 in the foregoing embodiments.

In the description of this specification, descriptions referring to the terms "one embodiment", "some embodiments", "examples", "specific examples" or "some examples" mean that specific features, structures, materials or characteristics described in connection with this embodiment or example are included in at least one embodiment or example of this disclosure. In this specification, the schematic representations of the foregoing terms are not necessarily aimed at the same embodiment or example. Moreover, specific features, structures, materials or characteristics described may be combined in any one or more embodiments or examples in a suitable manner.

In the descriptions of this disclosure, it will be understood that orientations or positional relationships indicated by the terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential", and the like are orientations or positional relationships as shown in the drawings, and are only for the purpose of facilitating and simplifying the descriptions of this disclosure instead of indicating or implying that apparatuses or elements indicated must have particular orientations, and be constructed and operated in the particular orientations, so that these terms are not construed as limiting this disclosure.

In addition, the terms "first" and "second" are merely intended for a purpose of description, and shall not be understood as an indication or implication of relative importance or implicit indication of a quantity of indicated technical features. Therefore, a feature limited by "first", "second", or the like may explicitly or implicitly include at least one of the features. In the description of this disclosure, "a plurality of" means at least two, for example, two, three, or the like, unless otherwise expressly and specifically limited.

In this disclosure, unless otherwise expressly specified and limited, the terms "mount", "join", "connect", "fasten", or the like will be understood in a broad sense, such as, a fixed connection, a detachable connection, or an integral connection; a mechanical connection, or an electrical connection; a direct connection, an indirect connection through an intermediate medium, an internal connection of two elements, or interaction between two elements. For those of ordinary skill in the art, the specific meanings of the foregoing terms in this disclosure can be understood according to specific situations.

In this disclosure, unless otherwise expressly specified and limited, the first feature being "on" or "under" the second feature may mean that the first and second features are in direct contact, or the first and second features are in indirect contact through an intermediate medium. Further, the first feature being "on", "above" and "on the upper side of" the second feature may mean that the first feature is directly above or obliquely above the second feature, or merely indicates that the first feature has a higher elevation than the second feature. The first feature being "under", "below" and "on the lower side of" the second feature may mean that the first feature is directly below or obliquely below the second feature, or merely indicates that the first feature has a lower elevation than the second feature.

Although embodiments of this disclosure have been shown and described above, it is to be understood that embodiments described above are exemplary and should not be construed as a limitation of this disclosure. Variations, modifications, substitutions, and variations of the above embodiments may be made by those of ordinary skill in the art within the scope of this disclosure.

**Claims**

1. A control unit, wherein the control unit comprises:

    a master chip;
    and at least two of a traction motor drive circuit, a first DC-DC converter drive circuit, a transmission drive circuit, a throttle signal sampling circuit, a second DC-DC converter drive circuit, an on-board charger, OBC, drive circuit, and a battery management system, BMS, that are separately connected to the master chip, wherein
    the traction motor drive circuit is configured to drive a traction motor of a vehicle to work;
    the first DC-DC converter drive circuit is configured to drive a first DC-DC converter to work, so as to boost a voltage provided by a power battery of the vehicle;
    the transmission drive circuit is configured to drive a transmission solenoid of the vehicle to work;
    the throttle signal sampling circuit is configured to sample a throttle signal of the vehicle;
    the second DC-DC converter drive circuit is configured to drive a second DC-DC converter to work, so as to buck a voltage provided by the power battery;
    the OBC drive circuit is configured to drive an OBC of the vehicle to work; and
    the BMS is configured to monitor a status of the power battery.

2. The control unit according to claim 1, wherein the control unit further comprises at least one of a generation motor drive circuit and an engine drive circuit that are separately connected to the master chip;

    the generation motor drive circuit is configured to drive a generation motor of the vehicle to work; and
    the engine drive circuit is configured to drive a fuel injector and an igniter of an engine of the vehicle to work.

3. The control unit according to claim 2, wherein the control unit comprises the traction motor drive circuit, the engine drive circuit, and the throttle signal sampling circuit; and
    the master chip is configured to: receive a throttle signal sent by the throttle signal sampling circuit, determine output torque of the traction motor and the engine based on the throttle signal, send a traction motor drive signal to the traction motor drive circuit based on output torque of the traction motor, and send an engine drive signal to the engine drive circuit based on output torque of the engine.

4. The control unit according to claim 2, wherein the control unit comprises the traction motor drive circuit, the first DC-DC converter drive circuit, and the generation motor drive circuit.

5. The control unit according to claim 2, wherein the control unit comprises the traction motor drive circuit, the first DC-DC converter drive circuit, the generation motor drive circuit, the transmission drive circuit, and the throttle signal sampling circuit.

6. The control unit according to claim 4, wherein the control unit further comprises:

    a first PWM signal output module, separately connected to the master chip and the traction motor drive circuit, and configured to output, under the control of the master chip, a first PWM signal to the traction motor drive circuit, so as to drive the traction motor to work;
    a second PWM signal output module, separately connected to the master chip and the generation motor drive circuit, and configured to output, under the control of the master chip, a second PWM signal to the generation motor drive circuit, so as to drive the generation motor to work; and
    a third PWM signal output module, separately connected to the master chip and the first DC-DC converter drive circuit, and configured to output, under the control of the master chip, a third PWM signal to the first DC-DC converter drive circuit, so as to control the first DC-DC converter to work.

7. The control unit according to claim 6, wherein the control unit further comprises a first electronic control module, a second electronic control module, and a first DC-DC converter;

    the first electronic control module is separately connected to the traction motor drive circuit and the traction motor, and the traction motor drive circuit is configured to control, based on the first PWM signal, the first electronic control module to work, so as to drive the traction motor to work;
    the second electronic control module is separately connected to the generation motor drive circuit and the generation motor, and the generation motor drive circuit is configured to control, based on the second PWM signal, the second electronic control module to work, so as to drive the generation motor to work; and
the first DC-DC converter is connected to the first DC-DC converter drive circuit, and the first DC-DC converter drive circuit is configured to control, based on the third PWM signal, the first DC-DC converter to work.

8. The control unit according to claim 6 or 7, wherein the control unit further comprises:

a first resolver excitation circuit, connected to the master chip, and configured to output, under the control of the master chip, a first excitation signal to a first resolver disposed corresponding to the traction motor, so as to supply a stator power source to a stator of the traction motor; and
a first resolver signal collection circuit, connected to the master chip, and configured to collect a resolver signal of the first resolver, wherein
the master chip is further configured to obtain a rotor position and angle of the traction motor based on the resolver signal collected by the first resolver signal collection circuit, and control, based on the rotor position and angle of the traction motor, the first PWM signal output module to output the first PWM signal.

9. The control unit according to any one of claims 6 to 8, wherein the control unit further comprises:

a first gate-level detection circuit, connected to the master chip, and configured to send an error signal upon receiving any signal of a traction motor overcurrent signal, a DC-DC battery side overvoltage signal, a DC-DC bus side overvoltage signal, and a traction motor drive circuit error signal, wherein
the master chip is further configured to prohibit the first PWM signal output module from outputting the first PWM signal upon receiving the error signal sent by the first gate-level detection circuit.

10. The control unit according to claim 9, wherein the control unit further comprises:
a first gate-level latch circuit, separately connected to the first gate-level detection circuit and the first PWM signal output module, and configured to continuously output a stop-output signal to the first PWM signal output module after receiving the error signal sent by the first gate-level detection circuit, so as to prohibit the first PWM signal output module from outputting the first PWM signal.

11. The control unit according to claim 10, wherein the first gate-level latch circuit is further connected to the master chip, and is configured to stop outputting the stop-output signal upon receiving a latch clear signal sent by the master chip.

12. The control unit according to any one of claims 9 to 11, wherein the control unit further comprises:

a first overcurrent detection circuit, separately connected to the master chip and the first gate-level detection circuit;
a first hardware overcurrent threshold setting circuit, separately connected to the master chip and the first overcurrent detection circuit, and configured to provide, under the control of the master chip, a first hardware current threshold for the first overcurrent detection circuit, so that when determining that the traction motor is overcurrent based on the first hardware current threshold and a sampled traction motor current, the first overcurrent detection circuit separately sends the traction motor overcurrent signal to the master chip and the first gate-level detection circuit.

13. The control unit according to claim 12, wherein the control unit further comprises:
a first current detection circuit, connected to the master chip, and configured to collect a traction motor current, wherein the master chip is further configured to determine that the traction motor is overcurrent when the traction motor current is greater than a first software current threshold, and the first software current threshold is smaller than the first hardware current threshold.

14. The control unit according to any one of claims 6 to 13, wherein the control unit further comprises:

a second resolver excitation circuit, connected to the master chip, and configured to output, under the control of the master chip, a second excitation signal to a second resolver disposed corresponding to the generation motor, so as to supply a stator power source to a stator of the generation motor; and
a second resolver signal collection circuit, connected to the master chip, and configured to collect a resolver signal of the second resolver, wherein
the master chip is further configured to obtain a rotor position and angle of the generation motor based on the resolver signal collected by the second resolver signal collection circuit, and control, based on the rotor position and angle of the generation motor, the second PWM signal output module to output the second PWM signal.

15. The control unit according to any one of claims 6 to 14, wherein the control unit further comprises:

a second gate-level detection circuit, connected to the master chip, and configured to send an error signal upon receiving any signal of a generation motor overcurrent signal, a DC-DC battery side overvoltage signal, a DC-DC bus side overvoltage signal, and a generation motor drive circuit error signal, wherein the master chip is further configured to prohibit the second PWM signal output module from outputting the second PWM signal upon receiving the error signal sent by the second gate-level detection circuit.

16. The control unit according to claim 15, wherein the control unit further comprises:
a second gate-level latch circuit, separately connected to the second gate-level detection circuit and the second PWM signal output module, and configured to continuously output the stop-output signal to the second PWM signal output module after receiving the error signal sent by the second gate-level detection circuit, so as to prohibit the second PWM signal output module from outputting the second PWM signal.

17. The control unit according to claim 16, wherein the second gate-level latch circuit is further connected to the master chip, and is configured to stop outputting the stop-output signal upon receiving a latch clear signal sent by the master chip.

18. The control unit according to any one of claims 15 to 17, wherein the control unit further comprises:

a second overcurrent detection circuit, separately connected to the master chip and the second gate-level detection circuit;
a second hardware overcurrent threshold setting circuit, separately connected to the master chip and the second overcurrent detection circuit, and configured to provide, under the control of the master chip, a second hardware current threshold for the second overcurrent detection circuit, so that when determining that the generation motor is overcurrent based on the second hardware current threshold and a sampled generation motor current, the second overcurrent detection circuit separately sends the generation motor overcurrent signal to the master chip and the second gate-level detection circuit.

19. The control unit according to claim 18, wherein the control unit further comprises:
a second current detection circuit, connected to the master chip, and configured to collect a generation motor current, wherein the master chip is further configured to determine that the generation motor is overcurrent when the generation motor current is greater than a second software current threshold, and the second software current threshold is smaller than the second hardware current threshold.

20. The control unit according to any one of claims 6 to 19, wherein the control unit further comprises:

a third gate-level detection circuit, connected to the master chip, and configured to send an error signal upon receiving any signal of a DC-DC overcurrent signal, a DC-DC battery side overvoltage signal, a DC-DC bus side overvoltage signal, and a first DC-DC converter drive circuit error signal, wherein the master chip is further configured to prohibit the third PWM signal output module from outputting the third PWM signal upon receiving the error signal sent by the third gate-level detection circuit.

21. The control unit according to claim 20, wherein the control unit further comprises:
a third gate-level latch circuit, separately connected to the third gate-level detection circuit and the third PWM signal output module, and configured to continuously output the stop-output signal to the third PWM signal output module after receiving the error signal sent by the third gate-level detection circuit, so as to prohibit the third PWM signal output module from outputting the third PWM signal.

22. The control unit according to claim 21, wherein the third gate-level latch circuit is further connected to the master chip, and is configured to stop outputting the stop-output signal upon receiving a latch clear signal sent by the master chip.

23. The control unit according to any one of claims 20 to 22, wherein the control unit further comprises:

a third overcurrent detection circuit, separately connected to the master chip and the third gate-level detection circuit; and

a third hardware overcurrent threshold setting circuit, separately connected to the master chip and the third overcurrent detection circuit, and configured to provide, under the control of the master chip, a third hardware current threshold for the third overcurrent detection circuit, so that when determining that the first DC-DC converter is overcurrent based on the third hardware current threshold and a sampled current of the first DC-DC converter, the third overcurrent detection circuit separately sends the DC-DC overcurrent signal to the master chip and the third gate-level detection circuit.

24. The control unit according to claim 23, wherein the control unit further comprises:
a third current detection circuit, connected to the master chip, and configured to collect a current of the first DC-DC converter, wherein the master chip is further configured to determine that the first DC-DC converter is overcurrent when the current of the first DC-DC converter is greater than a third software current threshold, and the third software current threshold is smaller than the third hardware current threshold.

25. The control unit according to any one of claims 9 to 24, wherein the control unit further comprises:

a first voltage sampling circuit, configured to sample a DC-DC battery side voltage;
a first overvoltage detection circuit, separately connected to the first voltage sampling circuit, the master chip, and the third gate-level detection circuit; and
a first hardware voltage threshold setting circuit, separately connected to the master chip and the first overvoltage detection circuit, and configured to provide, under the control of the master chip, a first hardware voltage threshold for the first overvoltage detection circuit, so that when determining that a DC-DC battery side is overvoltage based on the first hardware voltage threshold and the DC-DC battery side voltage, the first overvoltage detection circuit separately sends the DC-DC battery side overvoltage signal to the master chip and the gate-level detection circuit.

26. The control unit according to any one of claims 9 to 25, wherein the control unit further comprises:

a second voltage sampling circuit, configured to sample a DC-DC bus side voltage;
a second overvoltage detection circuit, separately connected to the second voltage sampling circuit, the master chip, and the gate-level detection circuit; and
a second hardware voltage threshold setting circuit, separately connected to the master chip and the second overvoltage detection circuit, and configured to provide, under the control of the master chip, a second hardware voltage threshold for the second overvoltage detection circuit, so that when determining that a DC-DC bus side is overvoltage based on the second hardware voltage threshold and the DC-DC bus side voltage, the second overvoltage detection circuit separately sends the DC-DC bus side overvoltage signal to the master chip and the gate-level detection circuit.

27. The control unit according to any one of claims 1 to 26, wherein the control unit further comprises:
a first CAN transceiver circuit, connected to the master chip, and configured to implement CAN communication between the master chip and an energy network of the vehicle.

28. The control unit according to claim 27, wherein the control unit further comprises:

a second CAN transceiver circuit, connected to the master chip, and configured to implement CAN communication between the master chip and a chassis of the vehicle; and
a third CAN transceiver circuit, connected to the master chip, and configured to implement CAN communication between the master chip and an ECM network of the vehicle.

29. The control unit according to claim 28, wherein the control unit further comprises an auxiliary chip and a monitoring circuit, the monitoring circuit is separately connected to the third CAN transceiver circuit, the master chip, and the auxiliary chip, and the master chip is further configured to:
send a CAN turn-off signal to the monitoring circuit via the auxiliary chip when the ECM network is abnormal, so as to turn off the third CAN transceiver circuit by the monitoring circuit.

30. The control unit according to claim 29, wherein the control unit further comprises a power management chip, the master chip is separately connected to the power management chip and the auxiliary chip, and is further configured to reset the master chip via the auxiliary chip and the power management chip when an error is reported.

31. The control unit according to any one of claims 1 to 30, wherein the control unit further comprises a driver chip connected to the master chip, and the driver chip is configured to drive, under the control of the master chip, a clutch pressure valve, a main pressure solenoid, and an overcooling protection solenoid of a transmission system.

32. The control unit according to any one of claims 1 to 31, wherein the control unit further comprises a sampling circuit that is configured to sample at least one of the following signals:
a pressure signal sampling signal, a temperature sampling signal, a switch signal, a position signal, a collision signal, an electronically-controlled coolant pump feedback signal, a waterway temperature, a traction motor temperature, a generation motor temperature, a first electronic control module temperature, a second electronic control module temperature, and a DC-DC converter temperature.

33. The control unit according to any one of claims 1 to 32, wherein the control unit further comprises:

   an LIN transceiver, connected to the master chip, and configured to connect to an external control unit, so as to implement communication between the master chip and the external control unit by using a LIN protocol; and
   a storage module, connected to the master chip, and configured to store data generated during a working process of the master chip.

34. The control unit according to claim 30, wherein the control unit further comprises:

   a power control circuit, separately connected to the second CAN transceiver circuit and the power management chip, and configured to control a power source, after receiving a wake-up signal, to supply power to the power management chip, so as to wake up the master chip via the power management chip, wherein the wake-up signal is generated by the second CAN transceiver circuit based on a wake-up packet sent by the chassis network; and after being woken up, the master chip outputs a power holding signal to the power control circuit, so that the power control circuit continuously controls, under the control of the power holding signal, the power source to supply power to the power management chip.

35. A powertrain, comprising the control unit according to any one of claims 1 to 34.

36. A vehicle, comprising the powertrain according to claim 35.

| | | | Traction motor drive circuit 2a | | On-board charger (OBC) drive circuit 3e |
|---|---|---|---|---|---|

Traction motor M1

Traction motor drive circuit 2a

On-board charger (OBC) drive circuit 3e

Transmission drive circuit 3b

Master chip 1

Battery management system (BMS) 3f

Power battery 400a

First DC-DC converter 310

First DC-DC converter drive circuit 3a

Second DC-DC converter 320

Second DC-DC converter drive circuit 3d

Throttle signal sampling circuit 3c

Low-voltage storage battery 400b

Control unit 100

FIG. 1

```
┌─────────────────────────────────────────────────────────────────────────────────────────────┐
│                                    Control unit 100                                            │
│                                                                                               │
┌──────────────────┐         ┌──────────────────┐  ┌──────────────────┐  ┌──────────────────┐  ┌─────────────┐
│                  │         │ First electronic │  │Traction motor drive│  │  First PWM signal │  │             │
│ Traction motor M1│─────────│ control module 5a│──│   circuit 2a      │──│ output module 4a │  │             │
└──────────────────┘         └──────────────────┘  └──────────────────┘  └──────────────────┘  │             │
                                                                                                │             │
┌──────────────────┐         ┌──────────────────┐  ┌──────────────────┐  ┌──────────────────┐  │             │
│                  │         │ Second electronic│  │ Generation motor │  │ Second PWM signal│  │Master chip 1│
│Generation motor M2│─────────│ control module 5b│──│ drive circuit 2b │──│ output module 4b │  │             │
└──────────────────┘         └──────────────────┘  └──────────────────┘  └──────────────────┘  │             │
                                                                                                │             │
┌──────────────────┐         ┌──────────────────┐  ┌──────────────────┐  ┌──────────────────┐  │             │
│                  │         │   First DC-DC    │  │First DC-DC converter│  │  Third PWM signal │  │             │
│ Power battery 400a│─────────│  converter 310   │──│ drive circuit 3a │──│ output module 4c │  └─────────────┘
└──────────────────┘         └──────────────────┘  └──────────────────┘  └──────────────────┘
│                                                                                               │
└─────────────────────────────────────────────────────────────────────────────────────────────┘
```

FIG. 2

FIG. 3

1

Overcurrent threshold self-check

Overcurrent threshold self-check

18

Overcurrent threshold H/L setting circuit

Generation motor three-phase current detection

17

UVW three-phase current detection circuit

U-phase current signal
V-phase current signal
W-phase current signal

Generation motor three-phase overcurrent diagnostic signal

UVW H overcurrent detection circuit

UVW L overcurrent detection circuit

19

Generation motor overcurrent signal
SMCU error signal
SMCU reset signal
PMIC reset signal
BST_V1 overvoltage signal
BST_V2 overvoltage signal
Drive board P error signal of generation motor
Drive board N error signal of generation motor

13

Gate-level detection circuit

Latch clear signal

16

Gate-level latch circuit

Buffer signal-sending and detection signal

Hardware DISABLE signal

4b

Power module PWM drive signal

▷ PWM buffer circuit
OE

U-phase+ PWM drive signal
U-phase− PWM drive signal
V-phase+ PWM drive signal
V-phase− PWM drive signal
W-phase+ PWM drive signal
W-phase− PWM drive signal

Power module error signal of generation motor

Error signal buffer circuit

Drive board P-phase error signal
Drive board N-phase error signal

MCU

Drive board reset signal

External signal

14

Resolver excitation circuit

Excitation+ signal
Excitation− signal

Resolver sine/ cosine signal collection circuit

Resolver Sin+ signal
Resolver Sin− signal
Resolver Cos+ signal
Resolver Cos− signal

FIG. 4

15

FIG. 5

FIG. 6

EP 4 711 211 A1

| Power control circuit 45 | Diagnosis protection module | Other modules |
|---|---|---|
| Power management chip 38 | Master chip 1 | CAN/CAN FD transceiver |
| Storage module 44 | | LIN Transceiver 43 |
| High-voltage collection module | PWM input/output module | Resolver excitation output module |
| ADC sampling module | High effective input/output module | High/low effective control module |

External interface

| High-voltage sampling interface | Internal interface 1 | Internal interface 2 | Internal interface 3 | Internal interface 4 |
|---|---|---|---|---|

FIG. 7

FIG. 8

Powertrain 1000

Control unit 100

FIG. 9

Vehicle 10000

Powertrain 1000

FIG. 10

## INTERNATIONAL SEARCH REPORT

International application No.

**PCT/CN2024/090061**

### A. CLASSIFICATION OF SUBJECT MATTER

B60R16/023(2006.01)i

According to International Patent Classification (IPC) or to both national classification and IPC

### B. FIELDS SEARCHED

Minimum documentation searched (classification system followed by classification symbols)

IPC:B60R

Documentation searched other than minimum documentation to the extent that such documents are included in the fields searched

Electronic data base consulted during the international search (name of data base and, where practicable, search terms used)

CJFD, CNTXT, ENTXTC, WPABSC: 控制器, 集成, 芯片, 多合一, 驱动电路, 电源管理, 电机, 发电机, 混动, 混合动力, 第二: WPABS, ENTXT, VEN, DWPI: controller, integration, driving circuit, chip, electrical source, motor, Hybrid, HEV.

### C. DOCUMENTS CONSIDERED TO BE RELEVANT

| Category* | Citation of document, with indication, where appropriate, of the relevant passages | Relevant to claim No. |
|---|---|---|
| X | CN 217374401 U (BYD CO., LTD.) 06 September 2022 (2022-09-06) description, paragraphs 58-137, and figures 1-5 | 1-36 |
| A | CN 107738623 A (LIAOCHENG UNIVERSITY) 27 February 2018 (2018-02-27) entire document | 1-36 |
| A | CN 113335095 A (DONGFENG MOTOR GROUP CO., LTD.) 03 September 2021 (2021-09-03) entire document | 1-36 |
| A | US 2021261074 A1 (BYD CO., LTD.) 26 August 2021 (2021-08-26) entire document | 1-36 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **19 July 2024** | **07 August 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2024/090061** |

| Patent document cited in search report | | | Publication date (day/month/year) | Patent family member(s) | | | Publication date (day/month/year) |
| --- | --- | --- | --- | --- | --- | --- | --- |
| CN | 217374401 | U | 06 September 2022 | None | | | |
| CN | 107738623 | A | 27 February 2018 | CN | 207670347 | U | 31 July 2018 |
| CN | 113335095 | A | 03 September 2021 | CN | 113335095 | B | 01 March 2022 |
| US | 2021261074 | A1 | 26 August 2021 | JP | 2021532720 | A | 25 November 2021 |
| | | | | JP | 7116245 | B2 | 09 August 2022 |
| | | | | EP | 3819158 | A1 | 12 May 2021 |
| | | | | EP | 3819158 | A4 | 11 August 2021 |
| | | | | EP | 3819158 | B1 | 12 June 2024 |
| | | | | KR | 20210024627 | A | 05 March 2021 |
| | | | | KR | 102512853 | B1 | 23 March 2023 |
| | | | | WO | 2020020345 | A1 | 30 January 2020 |
| | | | | US | 11491933 | B2 | 08 November 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310532927